# FASCICULE DE BREVET EUROPEEN

(11) **EP 3 588 772 B1**
(45) Date de publication et mention de la délivrance du brevet: **25.11.2026**
(21) Numéro de dépôt: 19182802.9
(22) Date de dépôt: 27.06.2019
(51) Int. Cl.: H02S 40/38

(54) **DISPOSITIF D'ALIMENTATION EN ÉNERGIE ÉLECTRIQUE AUTONOME, DISPOSITIF D'ENTRAÎNEMENT MOTORISÉ ET INSTALLATION DOMOTIQUE ASSOCIÉS**
AUTONOME STROMZUFÜHRUNGSVORRICHTUNG, ENTSPRECHENDE MOTORISIERTE ANTRIEBSVORRICHTUNG UND ENTSPRECHENDE HAUSTECHNIKANLAGE
DEVICE FOR SUPPLYING AUTONOMOUS ELECTRICAL ENERGY, MOTORISED DRIVE DEVICE AND ASSOCIATED HOME AUTOMATION INSTALLATION

(30) Priorité: 28.06.2018 FR 1855885
(43) Date de publication de la demande: 01.01.2020
(73) Titulaire: SIMU, 70100 Arc-les-Gray (FR)
(72) Inventeur: PLATRET, Adrien, 63350 BUHLON (FR)
(74) Mandataire: Lavoix

(56) Documents cités:
- EP-A1- 1 703 063
- WO-A2-2011/138556
- CN-U- 207 377 458
- FR-A1- 3 016 001

## Description

La présente invention concerne un dispositif d'alimentation en énergie électrique autonome pour une installation domotique de fermeture ou de protection solaire, ainsi qu'un dispositif d'entraînement motorisé pour une installation domotique de fermeture ou de protection solaire comprenant un tel dispositif d'alimentation en énergie électrique autonome.

La présente invention concerne également une installation domotique de fermeture ou de protection solaire comprenant un écran enroulable, au moyen d'un tel dispositif d'entraînement motorisé, sur un tube d'enroulement entraîné en rotation par un actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà le document CN 202 307 926 U qui décrit un dispositif d'alimentation en énergie électrique autonome pour une installation domotique de fermeture ou de protection solaire. Le dispositif d'alimentation en énergie électrique autonome comprend un panneau photovoltaïque, un dispositif de stockage d'énergie électrique, un boîtier, un premier support et un deuxième support. Le dispositif de stockage d'énergie électrique comprend une batterie. Le panneau photovoltaïque est assemblé sur le boîtier, dans une configuration assemblée du dispositif d'alimentation en énergie électrique autonome. Le boîtier est assemblé avec les premier et deuxième supports, en particulier deux pattes de fixation, dans la configuration assemblée du dispositif d'alimentation en énergie électrique autonome. Les premier et deuxième supports sont configurés pour se fixer sur une paroi d'un élément de l'installation domotique.

Ce dispositif d'alimentation en énergie électrique autonome présente l'inconvénient de réaliser l'assemblage de chaque patte de fixation disposée à une extrémité du boîtier avec le boîtier au moyen d'une tige filetée et d'un écrou. L'une des tiges filetées est creuse pour permettre le passage d'un câble d'alimentation électrique reliant électriquement la batterie à un actionneur électromécanique d'un dispositif d'entraînement motorisé de l'installation domotique.

De cette manière, le boîtier ne peut pas être démonté aisément des premier et deuxième supports, puisque cette opération de démontage du boîtier par rapport aux premier et deuxième supports nécessite le dévissage de chaque écrou par rapport à la tige filetée associée.

En outre, le démontage du boîtier par rapport aux premier et deuxième supports nécessite le retrait du câble d'alimentation électrique, en le faisant coulisser à l'intérieur de la tige filetée.

Par conséquent, suite à l'assemblage du dispositif d'alimentation en énergie électrique autonome et à la connexion électrique de la batterie à l'actionneur électromécanique, le boîtier ne peut pas être retiré aisément des premier et deuxième supports et nécessite une déconnexion électrique du câble d'alimentation électrique par rapport à l'actionneur électromécanique.

On connaît également le document EP 1 703 063 A1 qui décrit un dispositif d'alimentation en énergie électrique autonome pour une installation domotique de fermeture ou de protection solaire. Le dispositif d'alimentation en énergie électrique autonome comprend un panneau photovoltaïque et un profilé de fenêtre monobloc. Le panneau photovoltaïque est assemblé sur une surface externe du profilé de fenêtre, dans une configuration assemblée du dispositif d'alimentation en énergie électrique autonome. Le profilé de fenêtre comprend un câble d'alimentation électrique logé à l'intérieur d'une chambre creuse pour relier électriquement le panneau photovoltaïque à un élément de stockage d'énergie. En outre, le panneau photovoltaïque peut être fixé sur la surface externe du profilé de fenêtre, au niveau d'une ouverture ménagée dans le profilé de fenêtre, par collage, par vissage, par soudage ou par encliquetage élastique. La mise en place et le raccordement électrique du panneau photovoltaïque sont complexes.

La présente invention a pour but de résoudre les inconvénients précités et de proposer un dispositif d'alimentation en énergie électrique autonome pour une installation domotique de fermeture ou de protection solaire, un dispositif d'entraînement motorisé pour une installation domotique de fermeture ou de protection solaire comprenant un tel dispositif d'alimentation en énergie électrique autonome, ainsi qu'une installation domotique de fermeture ou de protection solaire comprenant un tel dispositif d'entraînement motorisé, permettant de garantir un montage et un démontage simple du dispositif d'alimentation en énergie électrique autonome, de sorte à faciliter une intervention sur ce dispositif d'alimentation en énergie électrique autonome ou une opération de maintenance ou de réparation de ce dispositif d'alimentation en énergie électrique autonome.

A cet égard, la présente invention vise, selon un premier aspect, un dispositif d'alimentation en énergie électrique autonome pour une installation domotique de fermeture ou de protection solaire selon la revendication 1, le dispositif d'alimentation en énergie électrique autonome comprenant au moins :
- un panneau photovoltaïque,
- un boîtier, le panneau photovoltaïque étant assemblé sur le boîtier, dans une configuration assemblée du dispositif d'alimentation en énergie électrique autonome, le boîtier comprenant au moins un premier dispositif de connexion électrique,
- un premier support de maintien et de connexion électrique et un deuxième support de maintien, le boîtier étant assemblé avec les premier et deuxième supports, dans la configuration assemblée du dispositif d'alimentation en énergie électrique autonome, chacun des premier et deuxième supports étant configuré pour être fixé sur une paroi d'un élément de l'installation domotique au moyen d'au moins un élément de fixation.

Selon l'invention, le premier support de maintien et de connexion électrique comprend au moins un autre dispositif de connexion électrique. L'assemblage du boîtier avec les premier et deuxième supports est mis en œuvre par un même mouvement de coulissement du boîtier par rapport aux premier et deuxième supports, le mouvement de coulissement du boîtier par rapport aux premier et deuxième supports étant mis en œuvre suivant une direction longitudinale du boîtier. En outre, le premier dispositif de connexion électrique du boîtier est assemblé avec l'autre dispositif de connexion électrique du premier support de maintien et de connexion électrique, suite au mouvement de coulissement du boîtier par rapport aux premier et deuxième supports et dans la configuration assemblée du dispositif d'alimentation en énergie électrique autonome.

Ainsi, un tel assemblage par un mouvement de coulissement du boîtier par rapport aux premier et deuxième supports permet de garantir un montage et un démontage simples, rapides et intuitifs du dispositif d'alimentation en énergie électrique autonome et, plus particulièrement, du boîtier, du panneau photovoltaïque et, éventuellement, d'un dispositif de stockage d'énergie électrique, inclus dans ce dispositif d'alimentation en énergie électrique autonome, par rapport aux premier et deuxième supports, de sorte à pouvoir remplacer le panneau photovoltaïque ou, éventuellement, remplacer ou recharger une batterie du dispositif de stockage d'énergie électrique ou remplacer un ensemble formé par le panneau photovoltaïque et le dispositif de stockage d'énergie électrique, sans nécessiter l'utilisation d'un outillage spécifique, sans engendrer de détérioration de l'installation domotique et sans avoir à démonter un coffre d'un dispositif d'occultation.

De cette manière, un tel assemblage par un mouvement de coulissement du boîtier par rapport aux premier et deuxième supports permet de simplifier une intervention de maintenance ou de réparation du dispositif d'alimentation en énergie électrique autonome, puisque les premier et deuxième supports restent en position par rapport à un élément de l'installation domotique.

En outre, le premier dispositif de connexion électrique du boîtier peut être connecté ou déconnecté du dispositif de connexion électrique du premier support de maintien et de connexion électrique, de manière simple, lors de l'installation du dispositif d'alimentation en énergie électrique autonome par rapport à l'installation domotique ou lors d'une intervention de maintenance ou de réparation de ce dispositif d'alimentation en énergie électrique autonome, en particulier pour le remplacement du panneau photovoltaïque et, éventuellement, le remplacement ou la recharge de la batterie du dispositif de stockage d'énergie électrique.

Par ailleurs, le premier dispositif de connexion électrique du boîtier peut être déconnecté et connecté du dispositif de connexion électrique du premier support de maintien et de connexion électrique, lors d'une opération de configuration d'un dispositif d'entraînement motorisé et, plus particulièrement, d'un actionneur électromécanique, sans avoir à démonter un coffre d'un dispositif d'occultation.

Selon une caractéristique avantageuse de l'invention, le premier support de maintien et de connexion électrique comprend également un premier élément d'emboîtement. Le deuxième support de maintien comprend un premier élément de maintien. Le boîtier comprend également un deuxième élément de maintien et un deuxième élément d'emboîtement. Le premier élément de maintien du deuxième support de maintien coopère par insertion avec le deuxième élément de maintien du boîtier, dans la configuration assemblée du dispositif d'alimentation en énergie électrique autonome. Le deuxième élément d'emboîtement du boîtier coopère par insertion avec le premier élément d'emboîtement du premier support de maintien et de connexion électrique, dans la configuration assemblée du dispositif d'alimentation en énergie électrique autonome. En outre, l'élément d'emboîtement du premier support de maintien et de connexion électrique, l'élément d'emboîtement du boîtier, l'élément de maintien du deuxième support de maintien et l'élément de maintien du boîtier correspondent à des éléments de fixation par insertion, de sorte à assembler le boîtier avec les premier et deuxième supports suivant le mouvement de coulissement.

Selon une autre caractéristique avantageuse de l'invention, le premier élément d'emboîtement du premier support de maintien et de connexion électrique est un logement et le deuxième élément d'emboîtement du boîtier est un embout, ou inversement. En outre, le premier élément de maintien du deuxième support de maintien est un pion et le deuxième élément de maintien du boîtier est une ouverture, ou inversement.

Selon une autre caractéristique avantageuse de l'invention, le dispositif d'alimentation en énergie électrique autonome comprend également un dispositif de stockage d'énergie électrique, le panneau photovoltaïque étant relié électriquement au dispositif de stockage d'énergie électrique, le dispositif de stockage d'énergie électrique comprenant au moins une batterie, la batterie étant disposée à l'intérieur du boîtier, dans la configuration assemblée du dispositif d'alimentation en énergie électrique autonome.

Selon une autre caractéristique avantageuse de l'invention, dans la configuration assemblée du dispositif d'alimentation en énergie électrique autonome, le premier support de maintien et de connexion électrique est disposé au niveau d'une première extrémité latérale du boîtier et le deuxième support de maintien est disposé entre la première extrémité latérale du boîtier et une deuxième extrémité latérale du boîtier, la deuxième extrémité latérale du boîtier étant opposée à la première extrémité latérale du boîtier.

Selon une autre caractéristique avantageuse de l'invention, le dispositif d'alimentation en énergie électrique autonome comprend également un câble d'alimentation électrique. En outre, l'autre dispositif de connexion électrique du premier support de maintien et de connexion électrique est relié électriquement avec le câble d'alimentation électrique, dans la configuration assemblée du dispositif d'alimentation en énergie électrique autonome.

Selon une autre caractéristique avantageuse de l'invention, le premier support de maintien et de connexion électrique comprend également un serre-câble. En outre, le serre-câble coopère avec le câble d'alimentation électrique, dans la configuration assemblée du dispositif d'alimentation en énergie électrique autonome.

La présente invention vise, selon un deuxième aspect, un dispositif d'entraînement motorisé pour une installation domotique de fermeture ou de protection solaire, le dispositif d'entraînement motorisé comprenant au moins :
- un actionneur électromécanique,
- un dispositif d'alimentation en énergie électrique autonome, selon l'invention et tel que mentionné ci-dessus, l'actionneur électromécanique étant relié électriquement au dispositif d'alimentation en énergie électrique autonome.

Ce dispositif d'entraînement motorisé présente des caractéristiques et avantages analogues à ceux décrits précédemment en relation avec le dispositif d'alimentation en énergie électrique autonome selon l'invention.

La présente invention vise, selon un troisième aspect, une installation domotique de fermeture ou de protection solaire comprenant un écran enroulable, au moyen d'un dispositif d'entraînement motorisé, conforme à l'invention et tel que mentionné ci-dessus, sur un tube d'enroulement entraîné en rotation par un actionneur électromécanique.

Cette installation domotique présente des caractéristiques et avantages analogues à ceux décrits précédemment en relation avec le dispositif d'entraînement motorisé selon l'invention.

Selon une autre caractéristique avantageuse de l'invention, l'élément de l'installation domotique, sur lequel sont fixés les premier et deuxième supports, est un mur d'un bâtiment, une glissière latérale d'un dispositif d'occultation ou un coffre d'un dispositif d'occultation.

D'autres particularités et avantages de l'invention apparaîtront encore dans la description ci-après.

Aux dessins annexés, donnés à titre d'exemples non limitatifs :
- la figure 1 est une vue schématique en coupe transversale d'une installation domotique conforme à un mode de réalisation de l'invention ;
- la figure 2 est une vue schématique en perspective de l'installation domotique illustrée à la figure 1 ;
- la figure 3 est une vue schématique en coupe axiale et partielle de l'installation domotique illustrée aux figures 1 et 2, montrant un actionneur électromécanique tubulaire de l'installation ;
- la figure 4 est une vue schématique en perspective de l'installation domotique telle qu'illustrée aux figures 1 à 3, montrant un dispositif d'alimentation en énergie électrique autonome, selon un premier exemple de réalisation, dans lequel le dispositif d'alimentation en énergie électrique autonome comprend un seul boîtier et un seul panneau photovoltaïque et où le boîtier est dans une position assemblée par rapport à un premier support ;
- la figure 5 est une vue analogue à la figure 4, où le boîtier est dans une position désassemblée par rapport au premier support ;
- la figure 6 est une vue schématique en perspective du dispositif d'alimentation en énergie électrique autonome illustré aux figures 4 et 5, où un deuxième support a été ôté ;
- la figure 7 est une vue analogue à la figure 6, du même dispositif vu selon un autre angle ;
- la figure 8 est une vue schématique en perspective et éclatée du dispositif d'alimentation en énergie électrique autonome illustré aux figures 4 à 7 ;
- la figure 9 est une vue schématique en perspective et partielle du dispositif d'alimentation en énergie électrique illustré aux figures 4 à 8, selon un autre angle de vue ;
- la figure 10 est une vue schématique en perspective du boîtier du dispositif d'alimentation en énergie électrique autonome illustré aux figures 4 à 9 ;
- la figure 11 est une vue schématique en perspective et éclatée du premier support du dispositif d'alimentation en énergie électrique autonome illustré aux figures 4 à 9 ;
- la figure 12 est une vue schématique en perspective du deuxième support du dispositif d'alimentation en énergie électrique autonome illustré à la figure 8 ; et
- la figure 13 est une vue schématique en perspective et à plus grande échelle d'un dispositif d'alimentation en énergie électrique autonome, selon un deuxième exemple de réalisation, dans lequel le dispositif d'alimentation en énergie électrique autonome comprend deux boîtiers et deux panneaux photovoltaïques.

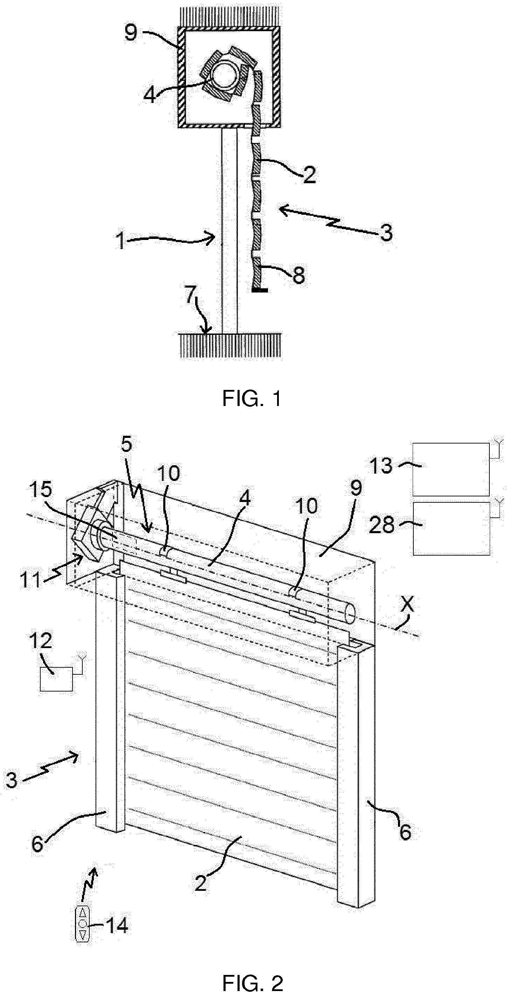

On décrit tout d'abord, en référence aux figures 1 et 2, une installation domotique conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, ou encore un portail roulant. La présente invention s'applique à tous les types de dispositif d'occultation.

On décrit, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5. L'écran 2 est mobile entre une position enroulée, en particulier haute, et une position déroulée, en particulier basse.

L'écran 2 mobile du dispositif d'occultation 3 est un écran de fermeture, d'occultation et/ou de protection solaire, s'enroulant sur le tube d'enroulement 4 dont le diamètre intérieur est sensiblement supérieur au diamètre externe d'un actionneur électromécanique 11, de sorte que l'actionneur électromécanique 11 puisse être inséré dans le tube d'enroulement 4, lors de l'assemblage du dispositif d'occultation 3.

Le dispositif d'entraînement motorisé 5 comprend l'actionneur électromécanique 11, en particulier de type tubulaire, permettant de mettre en rotation le tube d'enroulement 4, de sorte à déplacer, en particulier dérouler ou enrouler, l'écran 2 du dispositif d'occultation 3.

Le dispositif d'occultation 3 comprend le tube d'enroulement 4 pour enrouler l'écran 2. Dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux glissières latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être, par exemple, une unité de commande locale 12, où l'unité de commande locale 12 peut être reliée en liaison filaire ou non filaire avec une unité de commande centrale 13. L'unité de commande centrale 13 pilote l'unité de commande locale 12, ainsi que d'autres unités de commande locales similaires et réparties dans le bâtiment.

L'unité de commande centrale 13 peut être en communication avec une station météorologique déportée à l'extérieur du bâtiment, incluant, notamment, un ou plusieurs capteurs pouvant être configurés pour déterminer, par exemple, une température, une luminosité ou encore une vitesse de vent.

Une télécommande 14, pouvant être un type d'unité de commande locale, et pourvue d'un clavier de commande, qui comprend des éléments de sélection et d'affichage, permet, en outre, à un utilisateur d'intervenir sur l'actionneur électromécanique 11 et/ou l'unité de commande centrale 13.

Le dispositif d'entraînement motorisé 5 est, de préférence, configuré pour exécuter les commandes de déroulement ou d'enroulement de l'écran 2 du dispositif d'occultation 3, pouvant être émises, notamment, par la télécommande 14.

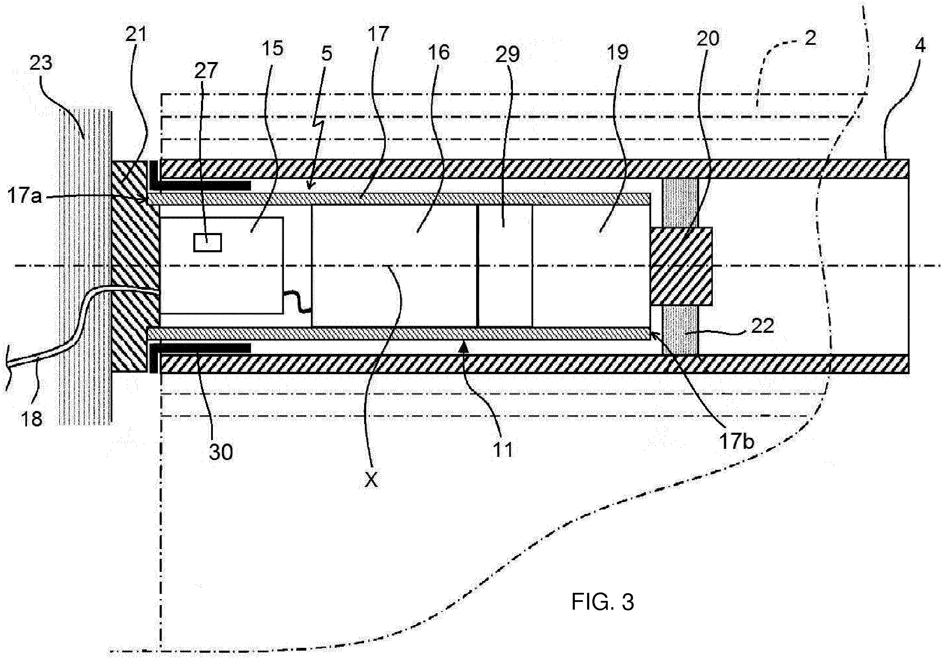

On décrit à présent, plus en détail et en référence à la figure 3, le dispositif d'entrainement motorisé 5, y compris l'actionneur électromécanique 11, appartenant à l'installation domotique des figures 1 et 2.

L'actionneur électromécanique 11 comprend un moteur électrique 16. Le moteur électrique 16 comprend un rotor et un stator, non représentés et positionnés de manière coaxiale autour d'un axe de rotation X, qui est également l'axe de rotation du tube d'enroulement 4 en configuration montée du dispositif d'entraînement motorisé 5.

Des moyens de commande de l'actionneur électromécanique 11, permettant le déplacement de l'écran 2 du dispositif d'occultation 3, sont constitués par au moins une unité électronique de contrôle 15. Cette unité électronique de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

L'unité électronique de contrôle 15 comprend également un module de communication 27, en particulier de réception d'ordres de commande, les ordres de commande étant émis par un émetteur d'ordres, tel que la télécommande 14 destinée à commander l'actionneur électromécanique 11 ou l'une des unités de commande locale 12 ou centrale 13.

Préférentiellement, le module de communication 27 de l'unité électronique de contrôle 15 est de type sans fil. En particulier, le module de communication 27 est configuré pour recevoir des ordres de commande radioélectriques.

Le module de communication 27 peut également permettre la réception d'ordres de commande transmis par des moyens filaires.

L'unité de commande centrale 13, l'unité électronique de contrôle 15 ou l'unité de commande locale 12 peuvent également être en communication avec un serveur 28, de sorte à contrôler l'actionneur électromécanique 11 suivant des données mises à disposition à distance par l'intermédiaire d'un réseau de communication, en particulier un réseau internet pouvant être relié au serveur 28.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

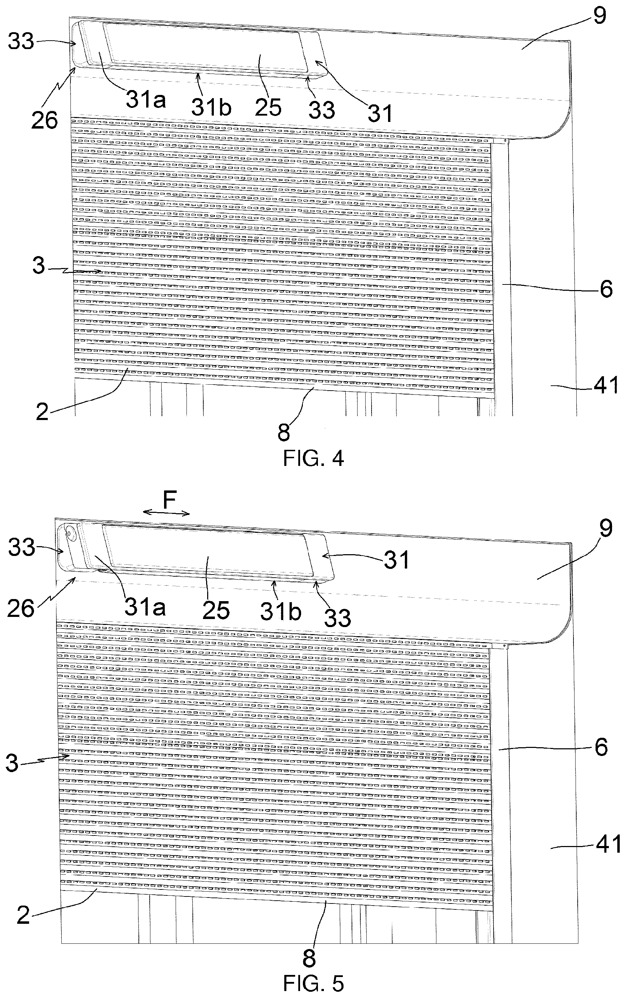

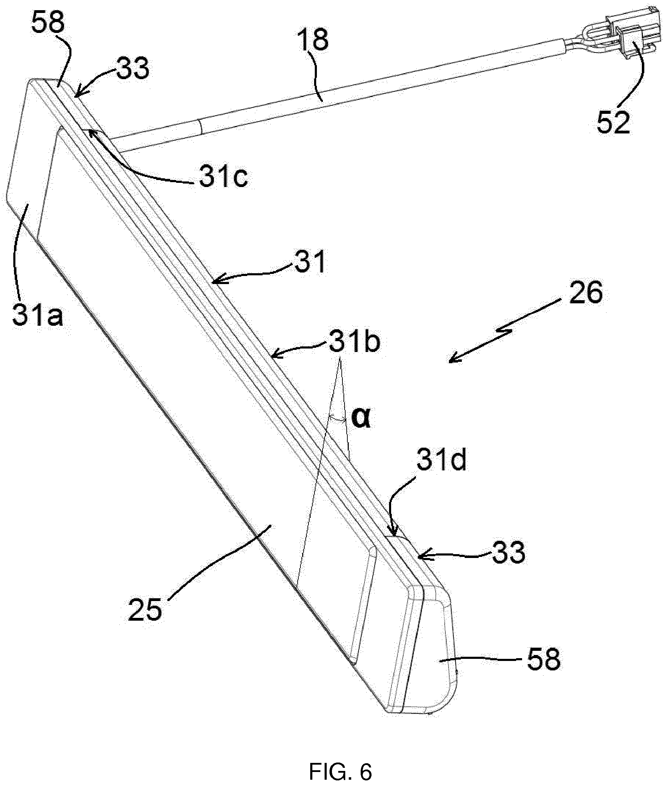

Le dispositif d'entraînement motorisé 5 comprend un dispositif d'alimentation en énergie électrique autonome 26, tel qu'illustré aux figures 4 à 13. Le dispositif d'alimentation en énergie électrique autonome 26 comprend au moins un panneau photovoltaïque 25 et, éventuellement, au moins un dispositif de stockage d'énergie électrique 24.

Ainsi, le dispositif d'alimentation en énergie électrique autonome 26 permet d'alimenter en énergie électrique l'actionneur électromécanique 11, sans être lui-même relié électriquement à un réseau secteur.

Avantageusement, le panneau photovoltaïque 25 est relié électriquement au dispositif de stockage d'énergie électrique 24.

Avantageusement, l'actionneur électromécanique 11 est relié électriquement au dispositif d'alimentation en énergie électrique autonome 26 et, plus particulièrement, au dispositif de stockage d'énergie électrique 24.

Ici, l'unité électronique de contrôle 15 de l'actionneur électromécanique 11 est reliée électriquement au dispositif d'alimentation en énergie électrique autonome 26 et, plus particulièrement, au dispositif de stockage d'énergie électrique batterie 24.

Avantageusement, l'actionneur électromécanique 11 est relié électriquement au dispositif d'alimentation en énergie électrique autonome 26 et, plus particulièrement, au dispositif de stockage d'énergie électrique 24 au moyen d'au moins un câble d'alimentation électrique 18, de sorte à permettre l'alimentation en énergie électrique de l'actionneur électromécanique 11 à partir du dispositif d'alimentation en énergie électrique autonome 26.

Avantageusement, le dispositif de stockage d'énergie électrique 24 comprend au moins une batterie 32.

Avantageusement, la batterie 32 comprend au moins un élément de stockage d'énergie électrique, non représenté.

Ici, la batterie 32 comprend une pluralité d'éléments de stockage d'énergie électrique. Préférentiellement, les éléments de stockage d'énergie électrique sont reliés électriquement en série.

Le nombre d'éléments de stockage d'énergie électrique de la batterie n'est pas limitatif.

Avantageusement, la batterie 32 est étanche.

Ainsi, une telle batterie 32 permet de garantir l'installation du dispositif de stockage d'énergie électrique 24 de manière simple et fiable à l'extérieur d'un bâtiment ou du coffre 9.

Avantageusement, le dispositif de stockage d'énergie électrique 24 est de type rechargeable et est configuré pour alimenter en énergie électrique l'actionneur électromécanique 11. En outre, le dispositif de stockage d'énergie électrique 24 est configuré pour être alimenté en énergie électrique par le panneau photovoltaïque 25.

Ainsi, le rechargement du dispositif de stockage d'énergie électrique 24 est mis en œuvre par énergie solaire au moyen du panneau photovoltaïque 25.

De cette manière, le dispositif de stockage d'énergie électrique 24 peut être rechargé sans avoir à démonter une partie du coffre 9 du dispositif d'occultation 3.

Avantageusement, le panneau photovoltaïque 25 comprend au moins une cellule photovoltaïque et, plus particulièrement, une pluralité de cellules photovoltaïques.

Avantageusement, le dispositif d'entraînement motorisé 5 et, en particulier, le panneau photovoltaïque 25 comprend des éléments de chargement configurés pour charger la batterie 32 du dispositif de stockage d'énergie électrique 24 à partir de l'énergie solaire récupérée par le panneau photovoltaïque 25.

Ainsi, les éléments de chargement configurés pour charger la batterie 32 du dispositif de stockage d'énergie électrique 24 à partir de l'énergie solaire permettent de convertir l'énergie solaire récupérée par le panneau photovoltaïque 25 en énergie électrique.

Avantageusement, l'alimentation en énergie électrique de l'actionneur électromécanique 11 par le dispositif d'alimentation en énergie électrique autonome 26 et, plus particulièrement, par le dispositif de stockage d'énergie électrique 24 est configurée pour se substituer à une alimentation en énergie électrique de l'actionneur électromécanique 11 par un réseau d'alimentation en énergie électrique.

Ainsi, l'alimentation en énergie électrique de l'actionneur électromécanique 11 par le dispositif d'alimentation en énergie électrique autonome 26 et, plus particulièrement, par le dispositif de stockage d'énergie électrique 24 permet de s'affranchir d'un raccordement au réseau d'alimentation en énergie électrique.

En variante, non représentée, l'alimentation en énergie électrique de l'actionneur électromécanique 11 est mise en œuvre, d'une part, par le dispositif d'alimentation en énergie électrique autonome 26 et, plus particulièrement, par le dispositif de stockage d'énergie électrique 24 et, d'autre part, par un réseau d'alimentation en énergie électrique.

Ainsi, l'actionneur électromécanique 11 est alors alimenté en énergie électrique soit par le dispositif d'alimentation en énergie électrique autonome 26 et, plus particulièrement, par le dispositif de stockage d'énergie électrique 24, soit par le réseau d'alimentation en énergie électrique.

Dans ce cas, l'alimentation en énergie électrique de l'actionneur électromécanique 11 par le dispositif d'alimentation en énergie électrique autonome 26 et, plus particulièrement, par le dispositif de stockage d'énergie électrique 24 peut permettre, notamment, de suppléer à une coupure d'alimentation en énergie électrique de l'actionneur électromécanique 11 par le réseau d'alimentation en énergie électrique.

En outre, l'alimentation en énergie électrique de l'actionneur électromécanique 11 par le réseau d'alimentation en énergie électrique permet de recharger le dispositif de stockage d'énergie électrique 24, en particulier lorsque le dispositif de stockage d'énergie électrique 24 est insuffisamment rechargé par le panneau photovoltaïque 25.

Un carter 17 de l'actionneur électromécanique 11 est, préférentiellement, de forme cylindrique.

Dans un mode de réalisation, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend également un réducteur 19, un frein 29 et un arbre de sortie 20.

Avantageusement, le réducteur 19 comprend au moins un étage de réduction. Ledit au moins un étage de réduction peut être un train d'engrenages de type épicycloïdal.

Le type et le nombre d'étages de réduction du réducteur ne sont pas limitatifs.

A titre d'exemple nullement limitatif, le frein 29 peut être un frein à ressort, un frein à came ou un frein électromagnétique.

L'actionneur électromécanique 11 peut également comprendre un dispositif de détection de fin de course et/ou d'obstacle, pouvant être mécanique ou électronique.

Avantageusement, le moteur électrique 16, le frein 29 et le réducteur 19 sont montés à l'intérieur du carter 17 de l'actionneur électromécanique 11.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen d'une couronne 30 insérée autour d'une première extrémité 17a du carter 17 de l'actionneur électromécanique 11. La couronne 30 permet ainsi de réaliser un palier. La deuxième liaison pivot, non représentée à la figure 3, est réalisée au niveau d'une deuxième extrémité du tube d'enroulement 4, non visible sur cette figure.

Avantageusement, l'actionneur électromécanique 11 comprend un support de couple 21. Le support de couple 21 est en saillie au niveau de la première extrémité 17a du carter 17 de l'actionneur électromécanique 11, en particulier l'extrémité 17a du carter 17 recevant la couronne 30. Le support de couple 21 de l'actionneur électromécanique 11 permet ainsi de fixer l'actionneur électromécanique 11 sur un bâti 23, en particulier à une joue du coffre 9.

En outre, le support de couple 21 de l'actionneur électromécanique 11 peut permettre d'obturer la première extrémité 17a du carter 17.

Par ailleurs, le support de couple 21 de l'actionneur électromécanique 11 peut permettre de supporter l'unité électronique de contrôle 15. L'unité électronique de contrôle 15 peut être alimentée en énergie électrique au moyen du câble d'alimentation électrique 18 connecté électriquement au dispositif de stockage d'énergie électrique 24.

Ici, et tel qu'illustré à la figure 3, l'unité électronique de contrôle 15 est ainsi disposée, autrement dit intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le bâti 23 ou dans le support de couple 21.

L'arbre de sortie 20 de l'actionneur électromécanique 11 est disposé à l'intérieur du tube d'enroulement 4 et au moins en partie à l'extérieur du carter 17 de l'actionneur électromécanique 11.

Une extrémité de l'arbre de sortie 20 est en saillie par rapport au carter 17 de l'actionneur électromécanique 11, en particulier par rapport à une deuxième extrémité 17b du carter 17 opposée à la première extrémité 17a.

L'arbre de sortie 20 de l'actionneur électromécanique 11 est configuré pour entraîner en rotation un élément de liaison 22 relié au tube d'enroulement 4. L'élément de liaison 22 est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

On décrit à présent, en référence aux figures 4 à 12, le dispositif d'alimentation en énergie électrique autonome 26 pour l'installation domotique de fermeture ou de protection solaire des figures 1 à 3, ce dispositif étant conforme à un premier exemple de réalisation de l'invention.

Le dispositif d'alimentation en énergie électrique autonome 26 comprend au moins le panneau photovoltaïque 25, un boîtier 31, un premier support 33 et un deuxième support 34.

Ici et tel qu'illustré aux figures 4 à 12, selon le premier exemple de réalisation, le dispositif d'alimentation en énergie électrique autonome 26 comprend le boîtier 31, le panneau photovoltaïque 25, le dispositif de stockage d'énergie électrique 24, ainsi que les premier et deuxième supports 33, 34.

Ainsi, le dispositif d'alimentation en énergie électrique autonome 26 forme un ensemble unitaire comprenant le boîtier 31, le panneau photovoltaïque 25 et le dispositif de stockage d'énergie électrique 24, de sorte à constituer un module d'alimentation en énergie électrique solaire.

Avantageusement, le boîtier 31 comprend une face avant 31a, une face arrière 31b, une première extrémité latérale 31c et une deuxième extrémité latérale 31d.

La deuxième extrémité latérale 31d du boîtier 31 est opposée à la première extrémité latérale 31c du boîtier 31.

Ici et comme illustré aux figures 4 à 8, le dispositif d'alimentation en énergie électrique autonome 26 comprend deux premiers supports 33. L'un des premiers supports 33 est disposé au niveau de la première extrémité latérale 31c du boîtier 31. Et l'autre des premiers supports 33 est disposé au niveau de la deuxième extrémité latérale 31d du boîtier 31.

En variante, non représentée, le dispositif d'alimentation en énergie électrique autonome 26 peut comprendre un seul premier support 33, disposé au niveau de l'une des première et deuxième extrémités latérales 31c, 31d du boîtier 31.

Le panneau photovoltaïque 25 est assemblé sur le boîtier 31 et, plus particulièrement, sur la face avant 31a du boîtier 31, dans une configuration assemblée du dispositif d'alimentation en énergie électrique autonome 26.

Avantageusement, le boîtier 31 et, plus particulièrement, la face avant 31a du boîtier 31 comprend un enfoncement 55 configuré pour recevoir le panneau photovoltaïque 25.

Avantageusement, la face avant 31a du boîtier 31 est inclinée par rapport à la face arrière 31b du boîtier 31, en particulier vers le haut, dans une configuration assemblée du dispositif d'alimentation en énergie électrique autonome 26 par rapport à l'installation domotique. En d'autres termes, les faces avant et arrière 31a, 31b du boîtier 31 se rapprochent l'une de l'autre en allant vers le haut.

Ainsi, l'inclinaison du panneau photovoltaïque 25 vers le haut par rapport à l'installation domotique de fermeture ou de protection solaire permet d'améliorer la captation de l'ensoleillement.

Avantageusement, l'inclinaison du panneau photovoltaïque 25 par rapport à l'installation domotique de fermeture ou de protection solaire présente une valeur d'inclinaison α, pouvant être comprise dans une plage de valeurs strictement supérieure à 0° et inférieure ou égale à 45° et, préférentiellement, de l'ordre de 15°.

En variante, non représentée, la face avant 31a du boîtier 31 est parallèle à la face arrière 31b du boîtier 31, dans une configuration assemblée du dispositif d'alimentation en énergie électrique autonome 26 par rapport à l'installation domotique, autrement dit la valeur d'inclinaison α est égale à 0°.

Dans la suite de la description, il est fait référence à un seul des deux premiers supports 33 et, plus particulièrement, à celui qui est disposé au niveau de la première extrémité latérale 31c du boîtier 31, dans la configuration assemblée du dispositif d'alimentation en énergie électrique autonome 26. Ceci vise à faciliter la compréhension du premier exemple de réalisation illustré aux figures 4 à 12, puisque ce premier support 33 est équipé d'éléments de connectique 36 configurés pour coopérer avec le câble d'alimentation électrique 18 et est assemblé avec un élément 41, 6, 9 de l'installation domotique, dans la configuration assemblée du dispositif d'alimentation en énergie électrique autonome 26 par rapport à l'installation domotique.

Dans ce premier exemple de réalisation illustré aux figures 4 à 12, le premier support 33 disposé au niveau de la deuxième extrémité latérale 31d du boîtier 31, dans la configuration assemblée du dispositif d'alimentation en énergie électrique autonome 26, sert seulement à garantir l'aspect esthétique du dispositif d'alimentation en énergie électrique autonome 26, en étant disposé dans le prolongement du boîtier 31.

Le boîtier 31 est assemblé avec les premiers supports 33, en particulier avec le premier support 33 disposé au niveau de la première extrémité latérale 31c du boîtier 31, dans la configuration assemblée du dispositif d'alimentation en énergie électrique autonome 26, et avec le deuxième support 34, dans la configuration assemblée du dispositif d'alimentation en énergie électrique autonome 26.

Avantageusement, le panneau photovoltaïque 25 est fixé sur le boîtier 31 par collage.

Le mode de fixation du panneau photovoltaïque sur le boîtier n'est pas limitatif et peut être différent. Il peut, notamment, s'agir d'un mode de fixation au moyen d'éléments de fixation par encliquetage élastique.

Le premier support 33 comprend au moins un dispositif de connexion électrique 36. En outre, le boîtier 31 comprend au moins un premier dispositif de connexion électrique 40.

Ici, les dispositifs de connexion électrique 36, 40 sont des fiches complémentaires, en particulier mâle et femelle, et destinées à s'enficher l'une dans l'autre.

L'assemblage du boîtier 31 avec les premier et deuxième supports 33, 34 est mis en œuvre par un mouvement de coulissement F du boîtier 31 par rapport aux premier et deuxième supports 33, 34, comme illustré par les figures 4 et 5.

Ainsi, un tel assemblage par un mouvement de coulissement F du boîtier 31 par rapport aux premier et deuxième supports 33, 34 permet de garantir un montage et un démontage simples, rapides et intuitifs du dispositif d'alimentation en énergie électrique autonome 26 et, plus particulièrement, du boîtier 31, du panneau photovoltaïque 25 et du dispositif de stockage d'énergie électrique 24 par rapport aux premier et deuxième supports 33, 34, de sorte à pouvoir remplacer le panneau photovoltaïque 25 ou remplacer ou recharger la batterie 32 du dispositif de stockage d'énergie électrique 24 ou remplacer l'ensemble unitaire formé par le boîtier 31, le panneau photovoltaïque 25 et le dispositif de stockage d'énergie électrique 24, sans nécessiter l'utilisation d'un outillage spécifique, sans engendrer de détérioration de l'installation domotique et sans avoir à démonter le coffre 9 du dispositif d'occultation 3.

De cette manière, un tel assemblage par un mouvement de coulissement F du boîtier 31 par rapport aux premier et deuxième supports 33, 34 permet de simplifier une intervention de maintenance ou de réparation du dispositif d'alimentation en énergie électrique autonome 26, puisque les premier et deuxième supports 33, 34 restent en position par rapport à un élément 41, 6, 9 de l'installation domotique.

En outre, le premier dispositif de connexion électrique 40 du boîtier 31 peut être connecté ou déconnecté du dispositif de connexion électrique 36 du premier support 33, de manière simple, lors de l'installation du dispositif d'alimentation en énergie électrique autonome 26 par rapport à l'installation domotique ou lors d'une intervention de maintenance ou de réparation du dispositif d'alimentation en énergie électrique autonome 26, en particulier pour le remplacement du panneau photovoltaïque 25 et le remplacement ou la recharge de la batterie 32 du dispositif de stockage d'énergie électrique 24.

Par ailleurs, le premier dispositif de connexion électrique 40 du boîtier 31 peut être déconnecté et connecté du dispositif de connexion électrique 36 du premier support 33, lors d'une opération de configuration du dispositif d'entraînement motorisé 5 et, plus particulièrement, de l'actionneur électromécanique 11, sans avoir à démonter le coffre 9 du dispositif d'occultation 3, sans avoir à accéder aux connexions électriques reliant le câble d'alimentation électrique 18 au dispositif de connexion électrique 36 du premier support 33 et tout en maintenant le boîtier 31 en contact avec les premier et deuxième supports 33, 34.

Une telle opération de configuration du dispositif d'entraînement motorisé 5 permet de réinitialiser au moins une partie des données mémorisées par l'unité électronique de contrôle 15, suite à la simulation d'une séquence de périodes d'alimentation et de coupure d'alimentation en énergie électrique de l'actionneur électromécanique 11, en connectant et en déconnectant le premier dispositif de connexion électrique 40 du boîtier 31 par rapport au dispositif de connexion électrique 36 du premier support 33.

Avantageusement, l'unité électronique de contrôle 15 est configurée pour détecter des périodes d'alimentation et de coupure d'alimentation en énergie électrique de l'actionneur électromécanique 11 à partir du dispositif d'alimentation en énergie électrique autonome 26 et, en particulier, du panneau photovoltaïque 25, uniquement au moyen d'éléments de mesure, non représentés, d'une grandeur liée à l'alimentation en énergie électrique de l'actionneur électromécanique 11 par ce panneau photovoltaïque 25.

Une période d'alimentation en énergie électrique de l'actionneur électromécanique 11 à partir du dispositif d'alimentation en énergie électrique autonome 26 correspond à la présence d'un branchement électrique reliant le premier dispositif de connexion électrique 40 du boîtier 31 avec le dispositif de connexion électrique 36 du premier support 33.

Une période de coupure d'alimentation en énergie électrique de l'actionneur électromécanique 11 à partir du dispositif d'alimentation en énergie électrique autonome 26 correspond à l'absence de branchement électrique reliant le premier dispositif de connexion électrique 40 du boîtier 31 avec le dispositif de connexion électrique 36 du premier support 33.

La grandeur liée à l'alimentation en énergie électrique délivrée par le panneau photovoltaïque 25 peut être, notamment, une tension, un courant ou une impédance.

A titre d'exemples nullement limitatifs, les éléments de mesure peuvent comprendre soit un diviseur de tension, un comparateur et un microcontrôleur dont l'une des entrées est munie d'un convertisseur analogique numérique, dans le cas où la grandeur mesurée est une tension, soit une résistance de shunt et un microcontrôleur dont l'une des entrées est munie d'un convertisseur analogique numérique, dans le cas où la grandeur mesurée est un courant.

Les données mémorisées par l'unité électronique de contrôle 15 pouvant être réinitialisées peuvent être, par exemple, les positions de fin de course de l'écran 2, le ou les seuils de détection d'obstacle et/ou la ou les unités de commande 12, 13, 14 appairées avec l'actionneur électromécanique 11.

Dans un exemple de réalisation, la séquence de périodes d'alimentation et de coupure d'alimentation en énergie électrique de l'actionneur électromécanique 11 comprend une première période de coupure d'alimentation en énergie électrique pendant une période de temps prédéterminée, pouvant être de l'ordre de deux secondes, une période d'alimentation en énergie électrique pendant une période de temps prédéterminée, pouvant être de l'ordre de sept secondes, et une deuxième période de coupure d'alimentation en énergie électrique pendant une période de temps prédéterminée, pouvant être de l'ordre de deux secondes.

Le mouvement de coulissement F du boîtier 31 par rapport aux premier et deuxième supports 33, 34 est mis en œuvre suivant une direction longitudinale du boîtier 31. Plus particulièrement, le mouvement de coulissement F du boîtier 31 par rapport aux premier et deuxième supports 33, 34 est mis en œuvre suivant une direction parallèle à une face, en particulier avant, du coffre 9 du dispositif d'occultation 3, à une face, en particulier avant, de l'une des glissières latérales 6 ou à un mur d'un bâtiment.

Ici, la course du mouvement de coulissement F du boîtier 31 par rapport aux premier et deuxième supports 33, 34 est de l'ordre de trente-cinq millimètres.

La longueur de la course du mouvement de coulissement du boîtier par rapport aux premier et deuxième supports n'est pas limitative et peut être différente.

Chacun des premier et deuxième supports 33, 34 est configuré pour être fixé sur une paroi d'un élément 41, 6, 9 de l'installation domotique au moyen d'au moins un élément de fixation, non représenté. Autrement dit, chacun des premier et deuxième supports 33, 34 est fixé sur la paroi de l'élément 41, 6, 9 de l'installation domotique au moyen d'au moins un élément de fixation, dans la configuration assemblée du dispositif d'alimentation en énergie électrique autonome 26 par rapport à l'installation domotique.

Ici, chacun des premier et deuxième supports 33, 34 comprend un unique élément de fixation. L'élément de fixation de chacun des premier et deuxième supports 33, 34 sur la paroi de l'élément 41, 6, 9 de l'installation domotique peut être, par exemple, une vis de fixation ou un rivet.

Le nombre et le type d'éléments de fixation de chacun des premier et deuxième supports sur la paroi de l'élément de l'installation domotique ne sont pas limitatifs.

Avantageusement, l'élément 41, 6, 9 de l'installation domotique est un mur 41 d'un bâtiment, l'une des glissières latérales 6 du dispositif d'occultation 3 ou le coffre 9 du dispositif d'occultation 3.

Ainsi, les premier et deuxième supports 33, 34 sont configurés pour être maintenus en position sur la paroi de l'élément 41, 6, 9 de l'installation domotique, tout en permettant le montage et le démontage du boîtier 31, du panneau photovoltaïque 25 et de la batterie 32 par rapport aux premier et deuxième supports 33, 34.

De cette manière, le panneau photovoltaïque 25 peut être remplacé aisément et la batterie 32 peut être remplacée ou rechargée aisément, lors d'une intervention de maintenance ou de réparation du dispositif d'alimentation en énergie électrique autonome 26.

L'ensemble unitaire formé par le dispositif d'alimentation en énergie électrique autonome 26 peut ainsi être assemblé aisément sur la paroi de l'élément 41, 6, 9 de l'installation domotique.

En outre, les premier et deuxième supports 33, 34 permettent de garantir une installation du dispositif d'alimentation en énergie électrique autonome 26 dans tout type d'installation domotique de fermeture ou de protection solaire et dans toute configuration de celle-ci, en particulier sur le mur 41 d'un bâtiment, sur l'une des glissières latérales 6 ou sur une paroi du coffre 9, plus particulièrement sur une face extérieure d'une paroi avant du coffre 9, ainsi que horizontalement ou verticalement.

Par ailleurs, dans le cas où le dispositif d'alimentation en énergie électrique autonome 26 est assemblé sur une paroi de l'une des glissières latérales 6 du dispositif d'occultation 3 ou sur une paroi du coffre 9 du dispositif d'occultation 3, chacun des premier et deuxième supports 33, 34 peut être fixé sur cette paroi en usine, puis le boîtier 31 peut être assemblé sur les premier et deuxième supports 33, 34 lors de la mise en service de l'installation domotique.

L'assemblage du boîtier 31 et, par conséquent, du panneau photovoltaïque 25 et du dispositif de stockage d'énergie électrique 24 sur les premier et deuxième supports 33, 34 lors de la mise en service de l'installation domotique peut ainsi permettre de s'affranchir de problématiques rencontrées de réveil du module de communication 27, lors du transport de l'actionneur électromécanique 11 comprenant l'unité électronique de contrôle 15, de même que de problématiques de consommation en énergie électrique du module de communication 27 engendrant une décharge du dispositif de stockage d'énergie électrique 24, puisque le dispositif d'alimentation d'énergie électrique autonome 6 est déconnecté électriquement de l'actionneur électromécanique 11 avant la mise en service de l'installation domotique.

Avantageusement, le dispositif d'alimentation en énergie électrique autonome 26 est disposé à l'extérieur de l'élément 41, 6, 9 de l'installation domotique, dans la configuration assemblée du dispositif d'alimentation en énergie électrique autonome 26 par rapport à l'installation domotique.

Avantageusement, chacun des premier et deuxième supports 33, 34 comprend au moins un trou de passage 42, 43.

Ici, chacun des premier et deuxième supports 33, 34 comprend un unique trou de passage 42, 43.

En outre, le trou de passage 42, 43 de chacun des premier et deuxième supports 33, 34 coopère, autrement dit est configuré pour coopérer, avec l'élément de fixation de ce premier ou deuxième support 33, 34 et avec la paroi de l'élément 41, 6, 9 de l'installation domotique, dans la configuration assemblée du dispositif d'alimentation en énergie électrique autonome 26 par rapport à l'installation domotique.

Le nombre de trous de passage de chacun des premier et deuxième supports n'est pas limitatif et peut être différent. Il peut être, notamment, supérieur ou égal à deux.

Avantageusement, l'assemblage du boîtier 31 par rapport aux premier et deuxième supports 33, 34 est mis en œuvre suite à la fixation de chacun des premier et deuxième supports 33, 34 sur la paroi de l'élément 41, 6, 9 de l'installation domotique.

Avantageusement, le premier support 33 est disposé dans le prolongement du boîtier 31, en particulier de l'une des première et deuxième extrémités latérales 31c, 31d du boîtier 31.

Ainsi, l'encombrement du dispositif d'alimentation en énergie électrique autonome 26 est limité.

En outre, l'aspect esthétique du dispositif d'alimentation en énergie électrique autonome 26 est amélioré.

Avantageusement, le premier support 33 comprend un corps 58.

Avantageusement, chacun des premier et deuxième supports 33, 34 est réalisé dans une matière plastique.

Avantageusement, le premier support 33 est masqué par la face avant 31a du boîtier 31, dans la configuration assemblée du dispositif d'alimentation en énergie électrique autonome 26.

Ainsi, l'aspect esthétique du dispositif d'alimentation en énergie électrique autonome 26 est amélioré.

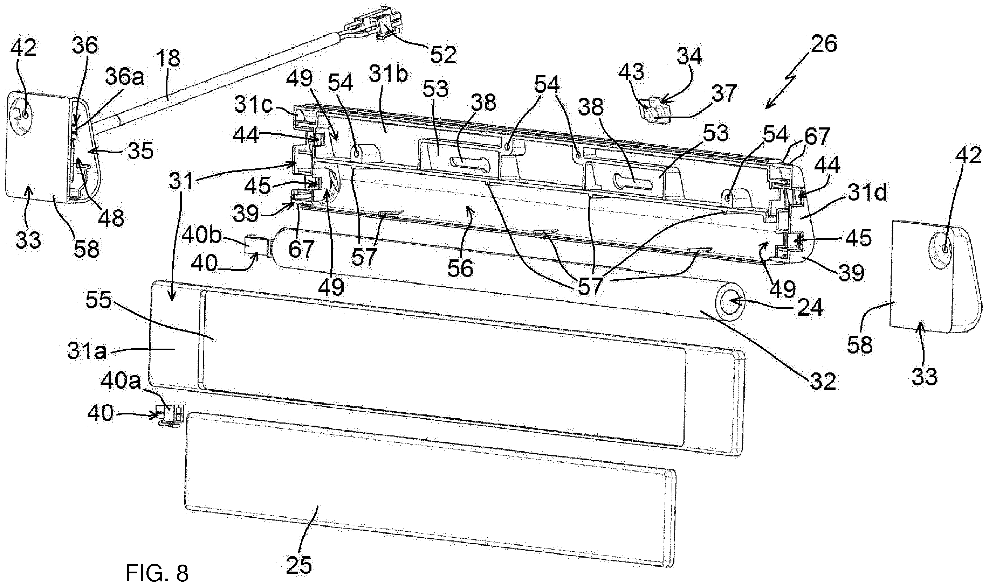

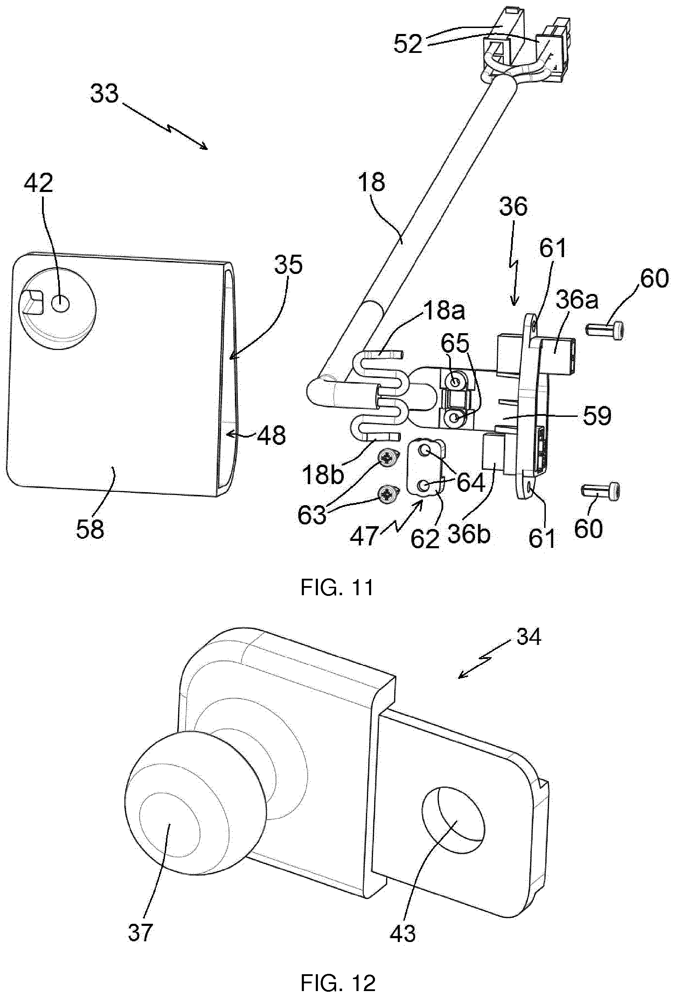

Avantageusement, le premier support 33 comprend également un logement 48 à l'intérieur duquel est disposé au moins en partie le dispositif de connexion électrique 36, comme illustré aux figures 8 et 11. En outre, le boîtier 31 comprend également un logement 49 à l'intérieur duquel est disposé au moins en partie le premier dispositif de connexion électrique 40, comme illustré à la figure 8.

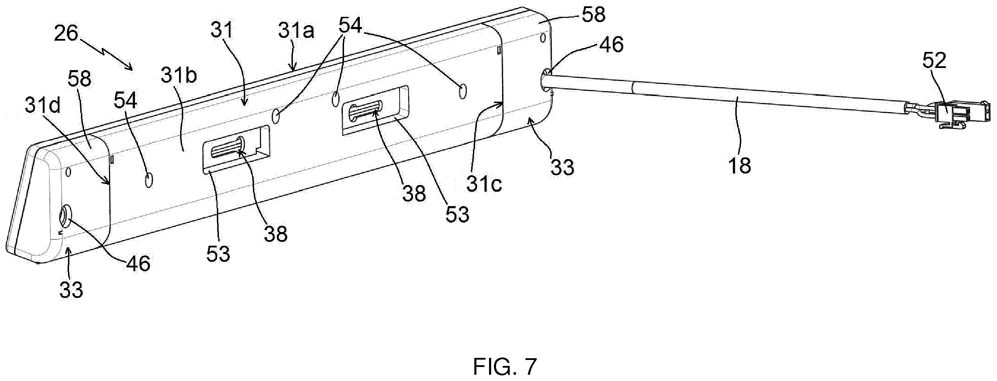

Avantageusement, le premier support 33 comprend une ouverture de passage 46, comme illustré à la figure 7. En outre, l'ouverture de passage 46 du premier support 33 coopère, autrement dit est configurée pour coopérer, avec le câble d'alimentation électrique 18, dans la configuration assemblée du dispositif d'alimentation en énergie électrique autonome 26.

Avantageusement, le dispositif de connexion électrique 36 du premier support 33 comprend au moins un connecteur électrique 36a, 36b.

Ici et comme illustré à la figure 11, le dispositif de connexion électrique 36 du premier support 33 comprend deux connecteurs électriques 36a, 36b, appelés par la suite premier connecteur électrique 36a et deuxième connecteur électrique 36b.

Le nombre de connecteurs électriques du dispositif de connexion électrique du premier support n'est pas limitatif et peut être différent. Il peut, notamment, être d'un seul ou supérieur ou égal à trois.

Avantageusement, le premier dispositif de connexion électrique 40 du boîtier 31 comprend au moins un connecteur électrique 40a, 40b.

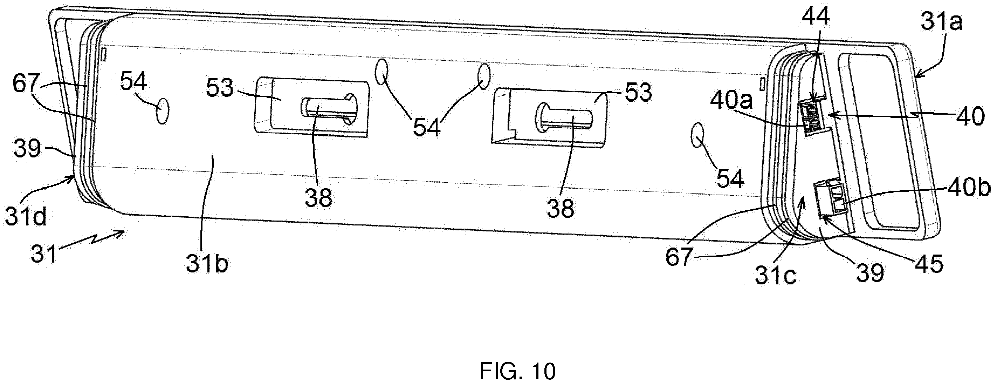

Ici et comme illustré aux figures 8 et 10, le premier dispositif de connexion électrique 40 du boîtier 31 comprend deux connecteurs électriques 40a, 40b, appelés par la suite premier connecteur électrique 40a et deuxième connecteur électrique 40b.

Le nombre de connecteurs électriques du premier dispositif de connexion électrique du boîtier n'est pas limitatif et peut être différent. Il peut, notamment, être d'un seul ou supérieur ou égal à trois.

Ici, le premier connecteur électrique 40a du premier dispositif de connexion électrique 40 du boîtier 31 coopère, autrement dit est configuré pour coopérer, avec le premier connecteur électrique 36a du dispositif de connexion électrique 36 du premier support 33, dans la configuration assemblée du dispositif d'alimentation en énergie électrique autonome 26. En outre, le deuxième connecteur électrique 40b du premier dispositif de connexion électrique 40 du boîtier 31 coopère, autrement dit est configuré pour coopérer, avec le deuxième connecteur électrique 36b du dispositif de connexion électrique 36 du premier support 33, dans la configuration assemblée du dispositif d'alimentation en énergie électrique autonome 26.

Avantageusement, le premier dispositif de connexion électrique 40 du boîtier 31 est disposé au niveau de l'une des première et deuxième extrémités latérales 31c, 31d du boîtier 31, en particulier de la première extrémité latérale 31c du boîtier 31, comme illustré aux figures 8 et 10.

Avantageusement, le boîtier 31 comprend au moins une ouverture de passage 44, 45 pour le premier dispositif de connexion électrique 40 du boîtier 31.

Ainsi, le premier dispositif de connexion électrique 40 du boîtier 31 est accessible à partir de l'extérieur du boîtier 31 pour relier électriquement ce dernier au dispositif de connexion électrique 36 du premier support 33.

Ici, le boîtier 31 comprend une première ouverture de passage 44 pour le premier connecteur électrique 40a du premier dispositif de connexion électrique 40 du boîtier 31. En outre, le boîtier 31 comprend une deuxième ouverture de passage 45 pour le deuxième connecteur électrique 40b du premier dispositif de connexion électrique 40 du boîtier 31.

Avantageusement, les première et deuxième ouvertures de passage 44, 45 du boîtier 31 sont ménagées au niveau de l'une des première et deuxième extrémités latérales 31c, 31d du boîtier 31 ou à chacune des première et deuxième extrémités latérales 31c, 31d du boîtier 31.

Avantageusement, le premier support 33 présente une première version et une deuxième version en fonction du sens de montage du boîtier 31 avec les premier et deuxième supports 33, 34, c'est-à-dire soit au niveau de la première extrémité latérale 31c du boîtier 31 soit au niveau de la deuxième extrémité latérale 31d du boîtier 31.

Le sens de montage du boîtier 31 avec les premier et deuxième supports 33, 34 dépend de la direction du mouvement de coulissement F du boîtier 31 par rapport aux premier et deuxième supports 33, 34, lors de l'assemblage du dispositif d'alimentation en énergie électrique autonome 26.

Avantageusement, le premier dispositif de connexion électrique 40 du boîtier 31 est disposé soit au niveau de la première extrémité latérale 31c du boîtier 31 soit au niveau de la deuxième extrémité latérale 31d du boîtier 31, en fonction du sens de montage du boîtier 31 avec les premier et deuxième support 33, 34, c'est-à-dire soit au niveau de la première extrémité latérale 31c du boîtier 31 soit au niveau de la deuxième extrémité latérale 31d du boîtier 31.

Avantageusement, l'assemblage du boîtier 31 avec les premier et deuxième supports 33, 34 est mis en œuvre au moyen d'éléments de fixation par insertion 35, 37, 38, 39.

Avantageusement, le premier support 33 comprend également un élément d'emboîtement 35, pouvant être appelé premier élément d'emboîtement. Le deuxième support 34 comprend un élément de maintien 37, pouvant être appelé premier élément de maintien. Le boîtier 31 comprend également un élément de maintien 38 et un élément d'emboîtement 39, pouvant être appelés deuxième élément de maintien et deuxième élément d'emboîtement.

L'élément de maintien 37 du deuxième support 34 coopère, autrement dit est configuré pour coopérer, avec l'élément de maintien 38 du boîtier 31, dans la configuration assemblée du dispositif d'alimentation en énergie électrique autonome 26.

L'élément d'emboîtement 39 du boîtier 31 coopère, autrement dit est configuré pour coopérer, avec l'élément d'emboîtement 35 du premier support 33, dans la configuration assemblée du dispositif d'alimentation en énergie électrique autonome 26.

En outre, le premier dispositif de connexion électrique 40 du boîtier 31 est assemblé, autrement dit est configuré pour être assemblé, avec le dispositif de connexion électrique 36 du premier support 33, dans la configuration assemblée du dispositif d'alimentation en énergie électrique autonome 26.

Avantageusement, l'élément de maintien 38 du boîtier 31 est disposé au niveau de la face arrière 31b du boîtier 31. En outre, l'élément d'emboîtement 39 du boîtier 31 est disposé au niveau de l'une des première et deuxième extrémités latérales 31c, 31d du boîtier 31.

Avantageusement, l'élément d'emboîtement 35 du premier support 33, l'élément d'emboîtement 39 du boîtier 31, l'élément de maintien 37 du deuxième support 34 et l'élément de maintien 38 du boîtier 31 correspondent à des éléments de fixation par insertion, de sorte à assembler le boîtier 31 avec les premier et deuxième supports 33, 34 suivant le mouvement de coulissement F.

Avantageusement, l'élément d'emboîtement 35 du premier support 33 est un logement et l'élément d'emboîtement 39 du boîtier 31 est un embout.

Avantageusement, l'élément d'emboîtement 39 du boîtier 31 comprend au moins un godron 67, de sorte à garantir l'étanchéité entre le boîtier 31 et le premier support 33, dans la configuration assemblée du dispositif d'alimentation en énergie électrique autonome 26.

Ici, l'élément d'emboîtement 39 du boîtier 31 comprend deux godrons 67.

Le nombre de godrons de l'élément d'emboîtement du boîtier n'est pas limitatif et peut être différent. Il peut être, par exemple, d'un seul ou supérieur ou égal à trois.

Ici, l'ouverture formant l'élément de maintien 38 du boîtier 31 est de forme oblongue, de sorte à permettre le mouvement de coulissement F du boîtier 31 par rapport aux premier et deuxième supports 33, 34, lors de l'assemblage du dispositif d'alimentation en énergie électrique autonome 26.

Avantageusement, l'ouverture de forme oblongue constituant l'élément de maintien 38 du boîtier 31 comprend une zone élargie au niveau de l'une de ses extrémités, de sorte à permettre l'insertion du pion constituant l'élément de maintien 37 du deuxième support 34 au travers de ladite ouverture formant l'élément de maintien 38 du boîtier 31.

Avantageusement, l'élément de maintien 38 du boîtier 31 est ménagé dans un enfoncement 53 du boîtier 31 et, plus particulièrement, dans la face arrière 31b du boîtier 31.

Avantageusement, le boîtier 31 comprend deux éléments de maintien 38, c'est-à-dire deux ouvertures. Chacun des éléments de maintien 38 du boîtier 31 est configuré pour coopérer avec un élément de maintien 37 d'un deuxième support 34, en fonction du sens de montage du boîtier 31 avec les premier et deuxième supports 33, 34.

En variante, non représentée, l'élément d'emboîtement 35 du premier support 33 est un embout et l'élément d'emboîtement 39 du boîtier 31 est un logement.

En variante, non représentée, l'élément de maintien 37 du deuxième support 34 est une ouverture et l'élément de maintien 38 du boîtier 31 est un pion.

Avantageusement, la batterie 32 est disposée à l'intérieur du boîtier 31, dans la configuration assemblée du dispositif d'alimentation en énergie électrique autonome 26.

Avantageusement, le boîtier 31 et, plus particulièrement, la face arrière 31b du boîtier 31 comprend un logement 56 du dispositif de stockage d'énergie électrique 24 et, plus particulièrement, de la batterie 32, comme illustré à la figure 8. En outre, le boîtier 31 et, plus particulièrement, la face arrière 31b du boîtier 31 comprend des éléments de maintien 57 du dispositif de stockage d'énergie électrique 24 et, plus particulièrement, de la batterie 32.

Ici, les éléments de maintien 57 du dispositif de stockage d'énergie électrique 24 sont des nervures ménagées sur une surface interne de la face arrière 31b du boîtier 31.

Avantageusement, le premier support 33 est disposé au niveau de l'une des première et deuxième extrémités latérales 31c, 31d du boîtier 31, dans la configuration assemblée du dispositif d'alimentation en énergie électrique autonome 26. En outre, le deuxième support 34 est disposé entre la première extrémité latérale 31c du boîtier 31 et la deuxième extrémité latérale 31d du boîtier 31, dans la configuration assemblée du dispositif d'alimentation en énergie électrique autonome 26.

Avantageusement, le boîtier 31 du dispositif d'alimentation en énergie électrique autonome 26 comprend deux pièces.

Ici, la première pièce du boîtier 31 correspond à la face avant 31a du boîtier 31. En outre, la deuxième pièce du boîtier 31 correspond à la face arrière 31b du boîtier 31.

Avantageusement, les première et deuxième pièces du boîtier 31 sont assemblées entre elles au moyen d'éléments de fixation, non représentés, dans une configuration assemblée du boîtier 31.

Ici, les éléments de fixation de la première pièce du boîtier 31 avec la deuxième pièce du boîtier 31 sont des vis de fixation, au nombre de quatre. Chacune des vis de fixation traverse un trou de passage 54 ménagé dans la deuxième pièce 31b du boîtier 31, comme illustré aux figures 7, 8 et 10, et est vissée dans un fût de vissage, non représenté, ménagé dans la première pièce 31a du boîtier 31, dans la configuration assemblée du boîtier 31.

Le type et le nombre des éléments de fixation des première et deuxième pièces du boîtier ne sont pas limitatifs et peuvent être différents. Les éléments de fixation peuvent être, par exemple, des éléments de fixation par encliquetage élastique et peuvent être, par exemple, au nombre de deux ou trois.

Ici, le boîtier 31 est réalisé en matière plastique.

La matière du boîtier n'est pas limitative et peut être différente. Il peut s'agir, en particulier, d'aluminium.

Avantageusement, le dispositif d'alimentation en énergie électrique autonome 26 comprend également le câble d'alimentation électrique 18. Le câble d'alimentation électrique 18 comprend au moins deux fils d'alimentation électrique 18a, 18b, comme illustré à la figure 11, appelés par la suite premier fil d'alimentation électrique 18a et deuxième fil d'alimentation électrique 18b.

En outre, le dispositif de connexion électrique 36 du premier support 33 est relié électriquement, autrement dit est configuré pour être relié électriquement, avec les premier et deuxième fils d'alimentation électrique 18a, 18b du câble d'alimentation électrique 18, dans la configuration assemblée du dispositif d'alimentation en énergie électrique autonome 26.

Ainsi, dans le cas où le dispositif d'alimentation en énergie électrique autonome 26 est assemblé sur une paroi de l'une des glissières latérales 6 du dispositif d'occultation 3 ou du coffre 9 du dispositif d'occultation 3, le premier support 33 peut être fixé sur la paroi en usine puis relié électriquement au câble d'alimentation électrique 18, lui-même relié électriquement à l'actionneur électromécanique 11, de sorte à éviter de rouvrir le coffre 9 du dispositif d'occultation 3 lors de la mise en service de l'installation domotique.

Ici, le premier connecteur électrique 36a du dispositif de connexion électrique 36 coopère, autrement dit est configuré pour coopérer, avec le premier fil d'alimentation électrique 18a du câble d'alimentation électrique 18, dans la configuration assemblée du dispositif d'alimentation en énergie électrique autonome 26. En outre, le deuxième connecteur électrique 36b du dispositif de connexion électrique 36 coopère, autrement dit est configuré pour coopérer, avec le deuxième fil d'alimentation électrique 18b du câble d'alimentation électrique 18, dans la configuration assemblée du dispositif d'alimentation en énergie électrique autonome 26.

Avantageusement, le dispositif de connexion électrique 36 comprend une platine 59. En outre, la platine 59 est fixée, autrement dit configurée pour être fixée, sur le corps 58 du premier support 33, au moyen d'éléments de fixation 60, dans une configuration assemblée du premier support 33.

Ici, les éléments de fixation 60 de la platine 59 sur le corps 58 du premier support 33 sont des vis de fixation, au nombre de deux. Chacune des vis de fixation traverse un trou de passage 61 ménagé dans la platine 59 du dispositif de connexion électrique 36 et est vissée dans un fût de vissage, non représenté, ménagé à l'intérieur du corps 58 du premier support 33, dans la configuration assemblée du premier support 33.

Le type et le nombre des éléments de fixation de la platine du dispositif de connexion électrique avec le corps du premier support ne sont pas limitatifs et peuvent être différents. Les éléments de fixation peuvent être, par exemple, des éléments de fixation par encliquetage élastique et peuvent être, par exemple, au nombre de un ou supérieur ou égal à trois.

Avantageusement, la platine 59 supporte, autrement dit est configurée pour supporter, les premier et deuxième connecteurs électriques 36a, 36b du dispositif de connexion électrique 36.

Ici et manière nullement limitative, les premier et deuxième connecteurs électriques 36a, 36b sont intégrés dans la platine 59.

Avantageusement, le câble d'alimentation électrique 18 comprend également au moins un connecteur électrique 52 coopérant, autrement dit étant configuré pour coopérer, avec au moins un connecteur électrique, non représenté, de l'actionneur électromécanique 11, dans la configuration assemblée du dispositif d'alimentation en énergie électrique autonome 26 par rapport à l'installation domotique.

Ainsi, lorsque le premier dispositif de connexion électrique 40 du boîtier 31 est connecté électriquement avec le dispositif de connexion électrique 36 du premier support 33, lorsque le câble d'alimentation électrique 18 est relié électriquement avec le dispositif de connexion électrique 36 du premier support 33 et lorsque le connecteur électrique 52 du câble d'alimentation électrique 18 est connecté électriquement avec le connecteur électrique de l'actionneur électromécanique 11, le dispositif d'alimentation en énergie électrique autonome 26 est relié électriquement à l'actionneur électromécanique 11.

Avantageusement, le premier support 33 comprend également un serre-câble 47. En outre, le serre-câble 47 coopère, autrement dit est configuré pour coopérer, avec le câble d'alimentation électrique 18, dans la configuration assemblée du dispositif d'alimentation en énergie électrique autonome 26.

Ainsi, le câble d'alimentation électrique 18 est maintenu en position au moyen du premier support 33 par rapport au dispositif d'alimentation en énergie électrique autonome 26, dans la configuration assemblée du dispositif d'alimentation en énergie électrique autonome 26.

En outre, le câble d'alimentation électrique 18 peut être maintenu en position par rapport au premier support 33 au moyen du serre-câble 47, ainsi que par rapport à la paroi de l'élément 41, 6, 9 de l'installation domotique, tout en permettant le démontage du boîtier 31, du panneau photovoltaïque 25 et de la batterie 32 par rapport aux premier et deuxième supports 33, 34, notamment au moyen des éléments de fixation par insertion 35, 37, 38, 39.

De cette manière, le panneau photovoltaïque 25 peut être remplacé aisément et, éventuellement, la batterie 32 peut être remplacée ou rechargée aisément, lors d'une intervention de maintenance ou de réparation du dispositif d'alimentation en énergie électrique autonome 26.

Par ailleurs, la déconnexion du premier dispositif de connexion électrique 40 du boîtier 31 par rapport au dispositif de connexion électrique 36 du premier support 33 permet de retirer le boîtier 31, le panneau photovoltaïque 25 et la batterie 32 par rapport aux premier et deuxième supports 33, 34, tout en maintenant en position le câble d'alimentation électrique 18 par rapport au premier support 33 au moyen du serre-câble 47.

Avantageusement, le serre-câble 47 est disposé à l'intérieur du logement 48 du premier support 33.

Avantageusement, le serre-câble 47 comprend une languette 62 et deux vis de fixation 63. En outre, chacune des vis de fixation 63 traverse un trou de passage 64 ménagé dans la languette 62 du serre-câble 47 et est vissée dans un fût de vissage 65 ménagé dans la platine 59 du dispositif de connexion électrique 36, dans la configuration assemblée du premier support 33.

Avantageusement, le câble d'alimentation électrique 18 est relié électriquement au dispositif de connexion électrique 36 du premier support 33, suite au passage du câble d'alimentation électrique 18 à l'intérieur du serre-câble 47 du premier support 33.

Avantageusement, le dispositif d'alimentation en énergie électrique autonome 26 comprend également un premier élément d'interface, non représenté, et un deuxième élément d'interface, non représenté. Chacun des premier et deuxième éléments d'interface coopère, autrement dit est configuré pour coopérer, avec l'un des premier et deuxième supports 33, 34, dans la configuration assemblée du dispositif d'alimentation en énergie électrique autonome 26 par rapport à l'installation domotique.

Ainsi, les premier et deuxième éléments d'interface permettent de garantir l'assemblage du dispositif d'alimentation en énergie électrique autonome 26 et, plus particulièrement, du boîtier 31 par rapport à la paroi de l'élément 41, 6, 9 de l'installation domotique, en particulier dans le cas où la paroi de l'élément 41, 6, 9 de l'installation domotique est de forme convexe, c'est-à-dire présentant une forme bombée, notamment vers l'extérieur du bâtiment, ou présente des imperfections ou des aspérités.

Avantageusement, chacun des premier et deuxième éléments d'interface est fixé, autrement dit est configuré pour être fixé, à l'un des premier et deuxième supports 33, 34 au moyen d'au moins un élément de fixation, dans la configuration assemblée du dispositif d'alimentation en énergie électrique autonome 26 par rapport à l'installation domotique.

Le ou les éléments de fixation de chacun des premier et deuxième éléments d'interface sur l'un des premier et deuxième supports 33, 34 peuvent être, par exemple, des éléments de fixation par encliquetage élastique, notamment au nombre de deux.

Ici, chaque élément de fixation est configuré pour coopérer et, plus particulièrement, s'engager dans le trou de passage 42, 43 de l'un des premier et deuxième supports 33, 34.

Le nombre et le type d'éléments de fixation de chacun des premier et deuxième éléments d'interface sur l'un des premier et deuxième supports ne sont pas limitatifs.

Avantageusement, chacun des premier et deuxième éléments d'interface comprend au moins une ouverture de passage, non représentée, d'au moins un élément de fixation de chacun des premier et deuxième supports 33, 34 sur la paroi de l'élément 41, 6, 9 de l'installation domotique.

Avantageusement, le dispositif d'alimentation en énergie électrique autonome 26 comprend au moins un élément de verrouillage 50 du boîtier 31 par rapport au premier support 33.

Ainsi, un retrait non souhaité du boîtier 31 par rapport aux premier et deuxième supports 33, 34 est évité au moyen de l'élément de verrouillage 50.

Ici, le dispositif d'alimentation en énergie électrique autonome 26 comprend un seul élément de verrouillage 50. En outre, l'élément de verrouillage 50 est un élément d'encliquetage élastique.

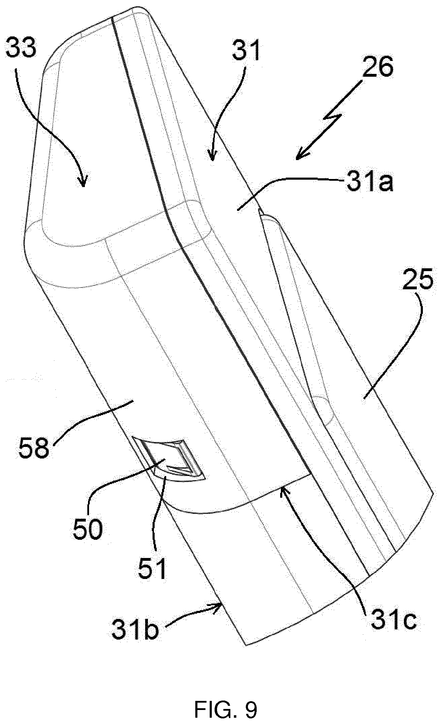

Dans l'exemple de réalisation illustré à la figure 9, l'élément de verrouillage 50 est un élément coulissant configuré pour coulisser à l'intérieur d'une rainure 51 du boîtier 31 entre une position déverrouillée et une position verrouillée. En outre, l'élément de verrouillage 50 est configuré pour prendre appui avec le premier support 33 dans la position verrouillée.

Ainsi, le verrouillage du boîtier 31 par rapport au premier support 33 peut être mis en œuvre de manière intuitive et sans avoir à utiliser un outil.

En variante, non représentée, le type et le nombre d'éléments de verrouillage peuvent être différents. Il peut s'agir, notamment, d'une vis, pouvant être imperdable, ou d'un rivet.

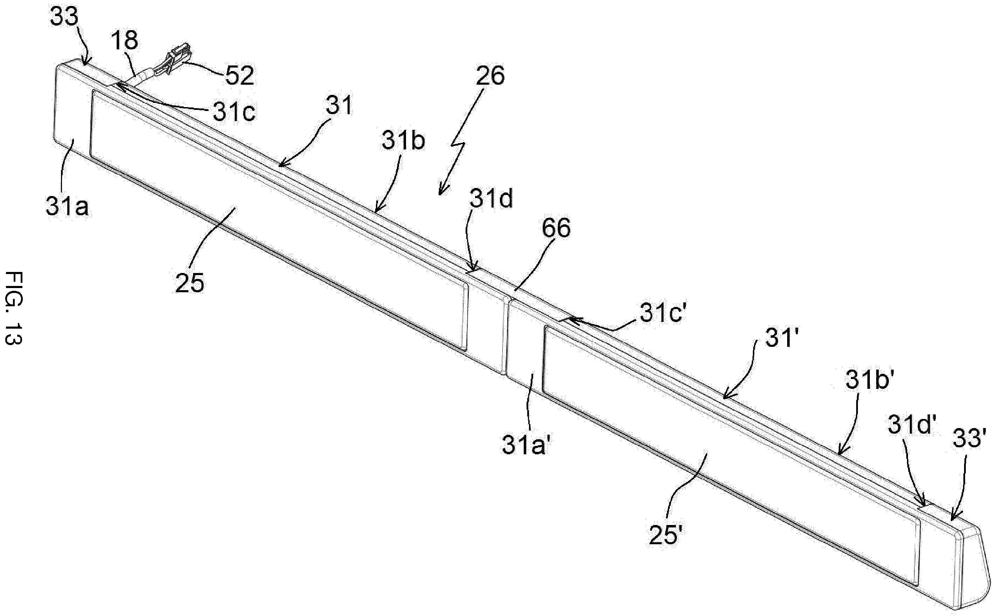

Selon un deuxième exemple de réalisation, représenté à la figure 13, le dispositif d'alimentation en énergie électrique autonome 26 comprend également au moins un autre boîtier 31' et au moins un autre panneau photovoltaïque 25', appelés par la suite deuxième boîtier et deuxième panneau photovoltaïque. Le deuxième panneau photovoltaïque 25' est assemblé, autrement dit configuré pour coopérer, avec le deuxième boîtier 31', dans la configuration assemblée du dispositif d'alimentation en énergie électrique autonome 26.

Avantageusement, le dispositif d'alimentation en énergie électrique autonome 26 comprend également au moins un autre dispositif de stockage d'énergie électrique, non représenté, appelé par la suite deuxième dispositif de stockage d'énergie électrique. En outre, le deuxième dispositif de stockage d'énergie électrique est disposé, autrement dit configuré pour être disposé, à l'intérieur du deuxième boîtier 31', dans la configuration assemblée du dispositif d'alimentation en énergie électrique autonome 26.

Avantageusement, le deuxième boîtier 31' comprend une face avant 31a', une face arrière 31b', une première extrémité latérale 31c' et une deuxième extrémité latérale 31d'.

La deuxième extrémité latérale 31d' du boîtier 31' est opposée à la première extrémité latérale 31c' du boîtier 31'.

Le boîtier 31 et le panneau photovoltaïque 25 décrits précédemment, en référence aux figures 4 à 10, sont appelés par la suite premier boîtier 31 et premier panneau photovoltaïque 25.

Ici, le premier boîtier 31 coopère, autrement dit est configuré pour coopérer, avec un seul premier support 33, disposé au niveau de la première extrémité latérale 31c du boîtier 31, dans la configuration assemblée du dispositif d'alimentation en énergie électrique autonome 26.

Ici, les deuxième boîtier 31' et deuxième panneau photovoltaïque 25' sont identiques aux premier boîtier 31 et premier panneau photovoltaïque 25.

Dans ce cas, le deuxième boîtier 31' comprend au moins un autre premier dispositif de connexion électrique, non représenté, identique au premier dispositif de connexion électrique 40 du premier boîtier 31.

Le premier dispositif de connexion électrique 40 de chacun des premier et deuxième boîtier 31, 31' est disposé au niveau de la première extrémité latérale 31c, 31c' du premier boîtier 31 et du deuxième boîtier 31'.

Le premier boîtier 31 comprend également un deuxième dispositif de connexion électrique, non représenté. Le deuxième dispositif de connexion électrique du premier boîtier 31 est semblable au premier dispositif de connexion électrique 40 du premier boîtier 31.

En outre, le deuxième dispositif de connexion électrique du premier boîtier 31 est disposé au niveau de la deuxième extrémité latérale 31d du premier boîtier 31.

Avantageusement, le dispositif d'alimentation en énergie électrique autonome 26 comprend également au moins un autre premier support 33', appelé par la suite troisième support. En outre, le troisième support 33' est disposé au niveau de la deuxième extrémité latérale 31d' du deuxième boîtier 31'.

Le premier support 33 comprend le dispositif de connexion électrique 36, tel que décrit précédemment, en référence aux figures 7, 8 et 10.

Avantageusement, le troisième support 33' peut être équipé ou non d'un dispositif de connexion électrique identique au dispositif de connexion électrique 36.

Ici, le troisième support 33' est symétrique au premier support 33, puisque ceux-ci sont disposés à deux extrémités opposés du dispositif d'alimentation en énergie électrique autonome 26.

Le dispositif d'alimentation en énergie électrique autonome 26 comprend également au moins un élément intermédiaire 66. L'élément intermédiaire 66 permet de relier électriquement le premier dispositif de connexion électrique du deuxième boîtier 31' au deuxième dispositif de connexion électrique du premier boîtier 31.

Ainsi, les premier et deuxième boîtiers 31, 31' sont reliés électriquement au moyen de leurs deuxième et premier dispositifs de connexion électrique respectifs et de l'élément intermédiaire 66.

De cette manière, la connexion électrique d'au moins deux boîtiers 31, 31' et, par conséquent, d'au moins deux panneaux photovoltaïques 25, 25' en série et d'au moins un dispositif de stockage d'énergie électrique 24 permet d'augmenter la puissance électrique fournie au dispositif d'entraînement motorisé 5 et, plus particulièrement, à l'actionneur électromécanique 11, par l'intermédiaire du dispositif de connexion électrique 36 du premier support 33 et du câble d'alimentation électrique 18.

On décrit à présent un procédé d'assemblage du dispositif d'alimentation en énergie électrique autonome 26, décrit précédemment selon les premier et deuxième exemples de réalisation et tels qu'illustrés aux figures 4 à 13.

Le procédé d'assemblage comprend une étape d'assemblage du boîtier 31 avec les premier et deuxième supports 33, 34 mise en œuvre par un mouvement de coulissement F du boîtier 31 par rapport aux premier et deuxième supports 33, 34.

En outre, le procédé d'assemblage comprend, lors du mouvement de coulissement F du boîtier 31 par rapport aux premier et deuxième supports 33, 34, une étape d'assemblage du premier dispositif de connexion électrique 40 du boîtier 31 avec le dispositif de connexion électrique 36 du premier support 33.

Avantageusement, préalablement à l'étape d'assemblage du boîtier 31 avec les premier et deuxième supports 33, 34, le procédé d'assemblage, en particulier de l'installation domotique, comprend une étape de fixation de chacun des premier et deuxième supports 33, 34 sur la paroi de l'élément 41, 6, 9 de l'installation domotique au moyen d'au moins un élément de fixation.

Avantageusement, préalablement à l'étape d'assemblage du boîtier 31 avec les premier et deuxième supports 33, 34, le procédé d'assemblage, en particulier de l'installation domotique, comprend également une étape de connexion électrique du dispositif de connexion électrique 36 du premier support 33 avec le câble d'alimentation électrique 18 et, préférentiellement, une étape de connexion électrique du câble d'alimentation électrique 18 avec le dispositif d'entraînement motorisé 5 et, plus particulièrement, avec l'actionneur électromécanique 11.

Grâce à la présente invention, un tel assemblage par un mouvement de coulissement du boîtier par rapport aux premier et deuxième supports permet de garantir un montage et un démontage simples, rapides et intuitifs du dispositif d'alimentation en énergie électrique autonome et, plus particulièrement, du boîtier, du panneau photovoltaïque et, éventuellement, d'un dispositif de stockage d'énergie électrique, inclus dans ce dispositif d'alimentation en énergie électrique autonome, par rapport aux premier et deuxième supports, de sorte à pouvoir remplacer le panneau photovoltaïque ou, éventuellement, remplacer ou recharger une batterie du dispositif de stockage d'énergie électrique ou remplacer un ensemble formé par le panneau photovoltaïque et le dispositif de stockage d'énergie électrique, sans nécessiter l'utilisation d'un outillage spécifique, sans engendrer de détérioration de l'installation domotique et sans avoir à démonter un coffre d'un dispositif d'occultation.

De nombreuses modifications peuvent être apportées aux exemples de réalisation décrits précédemment sans sortir du cadre de l'invention défini par les revendications.

En variante, non représentée, le dispositif d'alimentation en énergie électrique autonome 26 comprend le boîtier 31, le panneau photovoltaïque 25, ainsi que les premier et deuxième supports 33, 34 mais est dépourvu du dispositif de stockage d'énergie électrique 24. Dans un tel cas, le dispositif de stockage d'énergie électrique 24 est externe au dispositif d'alimentation en énergie électrique autonome 26 et relié électriquement soit à l'actionneur électromécanique 11 soit au panneau photovoltaïque 25, par exemple au moyen d'un câble d'alimentation électrique.

En outre, les modes de réalisation et variantes envisagés peuvent être combinés pour générer de nouveaux modes de réalisation de l'invention, sans sortir du cadre de l'invention défini par les revendications.

## Revendications

1. Dispositif d'alimentation en énergie électrique autonome (26) pour une installation domotique de fermeture ou de protection solaire, le dispositif d'alimentation en énergie électrique autonome (26) comprenant au moins :
- un panneau photovoltaïque (25),
- un boîtier (31), le panneau photovoltaïque (25) étant assemblé sur le boîtier (31), dans une configuration assemblée du dispositif d'alimentation en énergie électrique autonome (26), le boîtier (31) comprenant au moins un premier dispositif de connexion électrique (40),
- un premier support (33) de maintien et de connexion électrique et un deuxième support (34) de maintien, le boîtier (31) étant assemblé avec les premier et deuxième supports (33, 34), dans la configuration assemblée du dispositif d'alimentation en énergie électrique autonome (26), chacun des premier et deuxième supports (33, 34) étant configuré pour être fixé sur une paroi d'un élément (41, 6, 9) de l'installation domotique au moyen d'au moins un élément de fixation,
**caractérisé en ce que** :
- le premier support (33) de maintien et de connexion électrique comprend au moins un autre dispositif de connexion électrique (36),
- l'assemblage du boîtier (31) avec les premier et deuxième supports (33, 34) est mis en œuvre par un même mouvement de coulissement (F) du boîtier (31) par rapport aux premier et deuxième supports (33, 34), le mouvement de coulissement (F) du boîtier (31) par rapport aux premier et deuxième supports (33, 34) étant mis en œuvre suivant une direction longitudinale du boîtier (31), et
- le premier dispositif de connexion électrique (40) du boîtier (31) est assemblé avec l'autre dispositif de connexion électrique (36) du premier support (33) de maintien et de connexion électrique, suite au mouvement de coulissement (F) du boîtier (31) par rapport aux premier et deuxième supports (33, 34) et dans la configuration assemblée du dispositif d'alimentation en énergie électrique autonome (26).

2. Dispositif d'alimentation en énergie électrique autonome (26) pour une installation domotique de fermeture ou de protection solaire selon la revendication 1, **caractérisé en ce que** :
- le premier support (33) de maintien et de connexion électrique comprend également un élément d'emboîtement (35),
- le deuxième support (34) de maintien comprend un élément de maintien (37), et
- le boîtier (31) comprend également :
∘ un élément de maintien (38), l'élément de maintien (37) du deuxième support (34) de maintien coopérant par insertion avec l'élément de maintien (38) du boîtier (31), dans la configuration assemblée du dispositif d'alimentation en énergie électrique autonome (26), et
∘ un élément d'emboîtement (39), l'élément d'emboîtement (39) du boîtier (31) coopérant par insertion avec l'élément d'emboîtement (35) du premier support (33) de maintien et de connexion électrique, dans la configuration assemblée du dispositif d'alimentation en énergie électrique autonome (26).
et **en ce que** l'élément d'emboîtement (35) du premier support (33) de maintien et de connexion électrique, l'élément d'emboîtement (39) du boîtier (31), l'élément de maintien (37) du deuxième support (34) de maintien et l'élément de maintien (38) du boîtier (31) correspondent à des éléments de fixation par insertion, de sorte à assembler le boîtier (31) avec les premier et deuxième supports (33, 34) suivant le mouvement de coulissement (F).

3. Dispositif d'alimentation en énergie électrique autonome (26) pour une installation domotique de fermeture ou de protection solaire selon la revendication 2, **caractérisé en ce que** :
- l'élément d'emboîtement (35) du premier support (33) de maintien et de connexion électrique est un logement et l'élément d'emboîtement (39) du boîtier (31) est un embout, ou inversement, et
- l'élément de maintien (37) du deuxième support (34) de maintien est un pion et l'élément de maintien (38) du boîtier (31) est une ouverture, ou inversement.

4. Dispositif d'alimentation en énergie électrique autonome (26) pour une installation domotique de fermeture ou de protection solaire selon l'une quelconque des revendications 1 à 3, **caractérisé en ce que** le dispositif d'alimentation en énergie électrique autonome (26) comprend également un dispositif de stockage d'énergie électrique (24), le panneau photovoltaïque (25) étant relié électriquement au dispositif de stockage d'énergie électrique (24), le dispositif de stockage d'énergie électrique (24) comprenant au moins une batterie (32), la batterie (32) étant disposée à l'intérieur du boîtier (31), dans la configuration assemblée du dispositif d'alimentation en énergie électrique autonome (26).

5. Dispositif d'alimentation en énergie électrique autonome (26) pour une installation domotique de fermeture ou de protection solaire selon l'une quelconque des revendications 1 à 4, **caractérisé en ce que**, dans la configuration assemblée du dispositif d'alimentation en énergie électrique autonome (26), le premier support (33) de maintien et de connexion électrique est disposé au niveau d'une première extrémité latérale (31c) du boîtier (31) et le deuxième support (34) de maintien est disposé entre la première extrémité latérale (31c) du boîtier (31) et une deuxième extrémité latérale (31d) du boîtier (31), la deuxième extrémité latérale (31d) du boîtier (31) étant opposée à la première extrémité latérale (31c) du boîtier (31).

6. Dispositif d'alimentation en énergie électrique autonome (26) pour une installation domotique de fermeture ou de protection solaire selon l'une quelconque des revendications 1 à 5, **caractérisé en ce que** le dispositif d'alimentation en énergie électrique autonome (26) comprend également un câble d'alimentation électrique (18) et **en ce que** l'autre dispositif de connexion électrique (36) du premier support (33) de maintien et de connexion électrique est relié électriquement avec le câble d'alimentation électrique (18), dans la configuration assemblée du dispositif d'alimentation en énergie électrique autonome (26).

7. Dispositif d'alimentation en énergie électrique autonome (26) pour une installation domotique de fermeture ou de protection solaire selon la revendication 6, **caractérisé en ce que** le premier support (33) de maintien et de connexion électrique comprend également un serre-câble (47) et **en ce que** le serre-câble (47) coopère avec le câble d'alimentation électrique (18), dans la configuration assemblée du dispositif d'alimentation en énergie électrique autonome (26).

8. Dispositif d'entraînement motorisé (5) pour une installation domotique de fermeture ou de protection solaire, le dispositif d'entraînement motorisé (5) comprenant au moins :
- un actionneur électromécanique (11),
- un dispositif d'alimentation en énergie électrique autonome (26) selon l'une quelconque des revendications 1 à 7, l'actionneur électromécanique (11) étant relié électriquement au dispositif d'alimentation en énergie électrique autonome (26).

9. Installation domotique de fermeture ou de protection solaire comprenant un écran (2) enroulable, au moyen d'un dispositif d'entraînement motorisé (5), sur un tube d'enroulement (4) entraîné en rotation par un actionneur électromécanique (11), **caractérisée en ce que** le dispositif d'entraînement motorisé (5) est conforme à la revendication 8.

10. Installation domotique de fermeture ou de protection solaire selon la revendication 9, **caractérisée en ce que** l'élément (41, 6, 9) de l'installation domotique est un mur (41) d'un bâtiment, une glissière latérale (6) d'un dispositif d'occultation (3) ou un coffre (9) d'un dispositif d'occultation (3).

## Patentansprüche

1. Autonome Stromversorgungsvorrichtung (26) für eine Hausautomationsanlage zum Schließen oder zum Sonnenschutz, die autonome Stromversorgungsvorrichtung (26) mindestens umfassend:
- ein Photovoltaikmodul (25),
- ein Gehäuse (31), wobei das Photovoltaikmodul (25) in einem montierten Zustand der autonomen Stromversorgungsvorrichtung (26) an dem Gehäuse (31) montiert ist, das Gehäuse (31) umfassend mindestens eine erste elektrische Verbindungsvorrichtung (40),
- eine erste Halterung (33) zum Halten und zur elektrischen Verbindung und eine zweite Halterung (34) zum Halten, wobei das Gehäuse (31) in der montierten Konfiguration der autonomen Stromversorgungsvorrichtung (26) an der ersten und der zweiten Halterung (33, 34) zum Halten montiert ist, wobei jede von der ersten und der zweiten Halterung (33, 34) konfiguriert ist, um mittels mindestens eines Befestigungselements an einer Wand eines Elements (41, 6, 9) der Hausautomationsanlage befestigt zu werden,
**dadurch gekennzeichnet, dass**:
- die erste Halterung (33) zum Halten und zur elektrischen Verbindung mindestens eine weitere elektrische Verbindungsvorrichtung (36) umfasst,
- die Montage des Gehäuses (31) an der ersten und der zweiten Halterung (33, 34) durch eine einzige Gleitbewegung (F) des Gehäuses (31) in Bezug auf die erste und die zweite Halterung (33, 34) durchgeführt wird, wobei die Gleitbewegung (F) des Gehäuses (31) in Bezug auf die erste und die zweite Halterung (33, 34) entlang einer Längsrichtung des Gehäuses (31) durchgeführt wird, und
- die erste elektrische Verbindungsvorrichtung (40) des Gehäuses (31) nach der Gleitbewegung (F) des Gehäuses (31) in Bezug auf die erste und die zweite Halterung (33, 34) und in der montierten Konfiguration der autonomen Stromversorgungsvorrichtung (26) an der anderen elektrischen Verbindungsvorrichtung (36) der ersten Halterung (33) zum Halten und zur elektrischen Verbindung montiert ist.

2. Autonome Stromversorgungsvorrichtung (26) für eine Hausautomationsanlage zum Schließen oder zum Sonnenschutz nach Anspruch 1, **dadurch gekennzeichnet, dass**:
- die erste Halterung (33) zum Halten und zur elektrischen Verbindung auch ein Steckelement (35) umfasst,
- die zweite Halterung (34) zum Halten ein Halteelement (37) umfasst, und
- das Gehäuse (31) auch Folgendes umfasst:
o ein Halteelement (38), wobei das Halteelement (37) der zweiten Halterung (34) zum Halten in der montierten Konfiguration der autonomen Stromversorgungsvorrichtung (26) durch Stecken mit dem Halteelement (38) des Gehäuses (31) zusammenwirkt, und
o ein Steckelement (39), wobei das Steckelement (39) des Gehäuses (31) in der montierten Konfiguration der autonomen Stromversorgungsvorrichtung durch Einsetzen mit dem Steckelement (35) der ersten Halterung (33) zum Halten und zur elektrischen Verbindung zusammenwirkt (26),
und dass das Steckelement (35) der ersten Halterung (33) zum Halten und zur elektrischen Verbindung, das Steckelement (39) des Gehäuses (31), das Halteelement (37) der zweiten Halterung (34) und das Halteelement (38) des Gehäuses (31) Befestigungselemente durch Einsetzen sind, um das Gehäuse (31) mit der ersten und der zweiten Halterung (33, 34) gemäß der Gleitbewegung (F) zu montieren.

3. Autonome Stromversorgungsvorrichtung (26) für eine Hausautomationsanlage zum Schließen oder zum Sonnenschutz nach Anspruch 2, **dadurch gekennzeichnet, dass**:
- das Steckelement (35) der ersten Halterung (33) zum Halten und zur elektrischen Verbindung eine Aufnahme ist, und das Steckelement (39) des Gehäuses (31) ein Stutzen ist, oder umgekehrt, und
- das Halteelement (37) der zweiten Halterung (34) ein Zapfen ist, und das Halteelement (38) des Gehäuses (31) eine Öffnung ist, oder umgekehrt.

4. Autonome Stromversorgungsvorrichtung (26) für eine Hausautomationsanlage zum Schließen oder zum Sonnenschutz nach einem der Ansprüche 1 bis 3, **dadurch gekennzeichnet, dass** die autonome Stromversorgungsvorrichtung (26) auch eine Stromspeichervorrichtung (24) umfasst, wobei das Photovoltaikmodul (25) elektrisch mit der Stromspeichervorrichtung (24) verbunden ist und die Stromspeichervorrichtung (24) mindestens eine Batterie (32) umfasst, wobei die Batterie (32) in der montierten Konfiguration der autonomen Stromversorgungsvorrichtung (26) im Inneren des Gehäuses (31) angeordnet ist.

5. Autonome Stromversorgungsvorrichtung (26) für eine Hausautomationsanlage zum Schließen oder zum Sonnenschutz nach einem der Ansprüche 1 bis 4, **dadurch gekennzeichnet, dass** in der montierten Konfiguration der autonomen Stromversorgungsvorrichtung (26) die erste Halterung (33) zum Halten und zur elektrischen Verbindung an einem ersten seitlichen Ende (31c) des Gehäuses (31) angeordnet ist und die zweite Halterung (34) zum Halten zwischen dem ersten seitlichen Ende (31c) des Gehäuses (31) und einem zweiten Seitenende (31d) des Gehäuses (31) angeordnet ist, wobei das zweite seitliche Ende (31d) des Gehäuses (31) gegenüber dem ersten seitlichen Ende (31c) des Gehäuses (31) ist.

6. Autonome Stromversorgungsvorrichtung (26) für eine Hausautomationsanlage zum Schließen oder zum Sonnenschutz nach einem der Ansprüche 1 bis 5, **dadurch gekennzeichnet, dass** die autonome Stromversorgungsvorrichtung (26) auch ein Stromversorgungskabel (18) umfasst und dass die andere elektrische Verbindungsvorrichtung (36) der ersten Halterung (33) zum Halten und zur elektrischen Verbindung in der montierten Konfiguration der autonomen Stromversorgungsvorrichtung (26) elektrisch mit dem Stromversorgungskabel (18) verbunden ist.

7. Autonome Stromversorgungsvorrichtung (26) für eine Hausautomationsanlage zum Schließen oder zum Sonnenschutz nach Anspruch 6, **dadurch gekennzeichnet, dass** die erste Halterung (33) zum Halten und zur elektrischen Verbindung auch eine Kabelklemme (47) umfasst und dass die Kabelklemme (47) in der montierten Konfiguration der autonomen Stromversorgungsvorrichtung (26) mit dem Stromversorgungskabel (18) zusammenwirkt.

8. Motorisierte Antriebsvorrichtung (5) für eine Hausautomationsanlage zum Schließen oder zum Sonnenschutz, die motorisierte Antriebsvorrichtung (5) mindestens umfassend:
- einen elektromechanischen Aktuator (11),
- eine autonome Stromversorgungsvorrichtung (26) nach einem der Ansprüche 1 bis 7, wobei der elektromechanische Aktuator (11) elektrisch mit der autonomen Stromversorgungsvorrichtung (26) verbunden ist.

9. Hausautomationsanlage zum Schließen oder zum Sonnenschutz, umfassend einen Schirm (2), der mittels einer motorisierten Antriebsvorrichtung (5) auf ein Wickelrohr (4) aufrollbar ist, das von einem elektromechanischen Aktuator (11) in Drehung versetzt wird, **dadurch gekennzeichnet, dass** die motorisierte Antriebsvorrichtung (5) nach Anspruch 8 ist.

10. Hausautomationsanlage zum Schließen oder zum Sonnenschutz nach Anspruch 9, **dadurch gekennzeichnet, dass** das Element (41, 6, 9) der Hausautomationsanlage eine Wand (41) eines Gebäudes, eine Seitenführung (6) einer Abdeckvorrichtung (3) oder ein Kasten (9) einer Abdeckvorrichtung (3) ist.

## Claims

1. An autonomous electrical energy supply device (26) for a home automation closure or solar protection installation, the autonomous electrical energy supply device (26) comprising at least:
- a photovoltaic panel (25),
- a housing (31), the photovoltaic panel (25) being assembled on the housing (31), in an assembled configuration of the autonomous electrical energy supply device (26), the housing (31) comprising at least a first electrical connection device (40),
- a first retaining and electrical connection support (33) and a second retaining support (34), the housing (31) being assembled with the first and second supports (33, 34), in the assembled configuration of the autonomous electrical energy supply device (26), each of the first and second supports (33, 34) being configured to be fixed to a wall of an element (41, 6, 9) of the home automation installation by means of at least one fastening element,
**characterised in that**:
- the first retaining and electrical connection support (33) comprises at least one other electrical connection device (36),
- the assembly of the housing (31) with the first and second supports (33, 34) is achieved by a single sliding movement (F) of the housing (31) relative to the first and second supports (33, 34), with the sliding movement (F) of the housing (31) relative to the first and second supports (33, 34) along a longitudinal direction of the housing (31), and
- the first electrical connection device (40) of the housing (31) is assembled with the other electrical connection device (36) of the first retaining and electrical connection support (33), following the sliding movement (F) of the housing (31) relative to the first and second supports (33, 34) and in the assembled configuration of the autonomous electrical energy supply device (26).

2. The autonomous electrical energy supply device (26) for a home automation closure or solar protection installation according to claim 1, **characterised in that**:
- the first retaining and electrical connection support (33) also comprises an interlocking element (35),
- the second retaining support (34) comprises a retaining element (37), and
- the housing (31) also comprises:
o a retaining element (38), the retaining element (37) of the second retaining support (34) cooperating by insertion with the retaining element (38) of the housing (31), in the assembled configuration of the autonomous electrical energy supply device (26), and
∘ an interlocking element (39), the interlocking element (39) of the housing (31) cooperating by insertion with the interlocking element (35) of the first retaining and electrical connection support (33), in the assembled configuration of the autonomous electrical energy supply device (26).
and **in that** the interlocking element (35) of the first retaining and electrical connection support (33), the interlocking element (39) of the housing (31), the retaining element (37) of the second retaining support (34) and the retaining element (38) of the housing (31) are insertion-type fastening elements, so as to assemble the housing (31) with the first and second supports (33, 34) in accordance with the sliding movement (F).

3. The autonomous electrical energy supply device (26) for a home automation closure or solar protection installation according to claim 2, **characterised in that**:
- the interlocking element (35) of the first retaining and electrical connection support (33) is a recess and the interlocking element (39) of the housing (31) is an end piece, or vice versa, and
- the retaining element (37) of the second retaining support (34) is a pin and the retaining element (38) of the housing (31) is an opening, or vice versa.

4. The autonomous electrical energy supply device (26) for a home automation closure or solar protection installation according to any one of claims 1 to 3, **characterised in that** the autonomous electrical energy supply device (26) also comprises an electrical energy storage device (24), the photovoltaic panel (25) being electrically connected to the electrical energy storage device (24), the electrical energy storage device (24) comprising at least one battery (32), the battery (32) being arranged inside the housing (31), in the assembled configuration of the autonomous electrical energy supply device (26).

5. The autonomous electrical energy supply device (26) for a home automation closure or solar protection installation according to any one of claims 1 to 4, **characterised in that**, in the assembled configuration of the autonomous electrical energy supply device (26), the first retaining and electrical connection support (33) is arranged at a first lateral end (31c) of the housing (31) and the second retaining support (34) is arranged between the first lateral end (31c) of the housing (31) and a second lateral end (31d) of the housing (31), the second lateral end (31d) of the housing (31) being opposite the first lateral end (31c) of the housing (31).

6. The autonomous electrical energy supply device (26) for a home automation closure or solar protection installation according to any one of claims 1 to 5, **characterised in that** the autonomous electrical energy supply device (26) also comprises an electrical power supply cable (18) and **in that** the other electrical connection device (36) of the first retaining and electrical connection support (33) is electrically connected to the electrical power supply cable (18), in the assembled configuration of the autonomous electrical energy supply device (26).

7. The autonomous electrical energy supply device (26) for a home automation closure or solar protection installation according to claim 6, **characterised in that** the first retaining and electrical connection support (33) also comprises a cable clamp (47) and **in that** the cable clamp (47) cooperates with the electrical power supply cable (18), in the assembled configuration of the autonomous electrical energy supply device (26).

8. A motorized driving device (5) for a home automation closure or solar protection installation, the motorized driving device (5) comprising at least:
- an electromechanical actuator (11),
- an autonomous electrical energy supply device (26) according to any one of claims 1 to 7, the electromechanical actuator (11) being electrically connected to the autonomous electrical energy supply device (26).

9. A home automation closure or solar protection installation comprising a screen (2) which can be rolled up, by means of a motorized driving device (5), on a winding tube (4) driven in rotation by an electromechanical actuator (11), **characterised in that** the motorized driving device (5) is in accordance with claim 8.

10. The home automation closure or solar protection installation according to claim 9, **characterised in that** the element (41, 6, 9) of the home automation installation is a wall (41) of a building, a lateral slide (6) of an occultation device (3) or a box (9) of an occultation device (3).
